# EUROPEAN PATENT SPECIFICATION

(11) **EP 4 250 782 B1**
(45) Date of publication and mention of the grant of the patent: **26.11.2025**
(21) Application number: 21905714.8
(22) Date of filing: 14.12.2021
(51) Int. Cl.: H04W 4/80, H04W 56/00, H04W 52/02, H04W 24/02, H04W 84/18, H04L 43/10

(54) **HEARTBEAT SYNCHRONIZATION METHOD AND ELECTRONIC DEVICE**
HEARTBEAT SYNCHRONISATIONSVERFAHREN UND ELEKTRONISCHE VORRICHTUNG
PROCÉDÉ DE SYNCHRONISATION DE BATTEMENT DE COEUR ET DISPOSITIF ÉLECTRONIQUE

(30) Priority: 16.12.2020 CN 202011493060
(43) Date of publication of application: 27.09.2023
(73) Proprietor: Huawei Technologies Co., Ltd., Shenzhen, Guangdong 518129 (CN)
(72) Inventor: ZHANG, Kunpeng, Shenzhen, Guangdong 518129 (CN); CHEN, Zhichao, Shenzhen, Guangdong 518129 (CN); ZHANG, Jingjing, Shenzhen, Guangdong 518129 (CN); JI, Wangbo, Shenzhen, Guangdong 518129 (CN)
(74) Representative: Gill Jennings & Every LLP
(86) International application number: PCT/CN2021/137916
(87) International publication number: WO 2022/127785

(56) References cited:
- CN-A- 106 464 725
- CN-A- 108 494 615
- CN-A- 110 191 449
- CN-A- 110 753 086
- CN-A- 111 405 331
- US-A1- 2018 035 374

## Description

### TECHNICAL FIELD

The present invention relates to the field of wireless communication technologies, and in particular, to a heartbeat synchronization method, an electronic device, and a system.

### BACKGROUND

The Bluetooth protocol includes two technologies: a classic Bluetooth (basic rate, BR) technology and a Bluetooth low energy (Bluetooth low energy, BLE) technology. The BR includes an optional (optional) enhanced data rate (enhanced data rate, EDR) technology and an alternate media access control (media access control, MAC) layer and physical (physical, PHY) layer extension (alternate MAC and PHY layer extension, AMP) technology that is used alternately with Wi-Fi. The foregoing BR technology focuses on acceleration of a transmission rate, but costs of acceleration of the transmission rate are consumption of more energy. In many application scenarios, relative to accelerating the transmission rate, more attention is paid to device power consumption reducing, thereby promoting the emergence of the BLE technology.

In 2017, the SIG (Special Interest Group) released the protocol specification of the Bluetooth mesh 1.0 version based on the BLE technology, so that the Bluetooth technology officially enters the internet of things field. In a Bluetooth mesh network, a provisioner (provisioner) may exist. The provisioner may configure another device having a Bluetooth communication function, to add the device to the Bluetooth mesh network, so that the device becomes a node in the Bluetooth mesh network. To enable the provisioner to determine whether a node in the Bluetooth mesh network is in an active state, each node periodically sends an advertising message (advertising data, AD) to the provisioner by using BLE Bluetooth low energy. The periodically sent AD is also referred to as a heartbeat message. The provisioner receives the heartbeat message sent by the node through scanning. To avoid missing the heartbeat message sent by each node, the provisioner needs to continuously scan the heartbeat information of the node. As a result, air interface performance is reduced, and power consumption of the provisioner is high.
US2018035374A1 describes systems that configure a recurring heartbeat for a first field device to operate in synchronization with a second field device and a base station. The first field device turns off radio power for a hibernation period. Upon the beginning of a heartbeat, the first field device samples a sensor value and stores a report in a report buffer. The report includes the sensor value, identification of the first field device, identification of the report, and a circle number representing a number of intervening field devices in a communication path between the first field device and the base station. The first field device powers on the receive radio and receives a report from the second field device. The first field device transmits one or more reports stored in the report buffer, and powers off the radios for another hibernation period. CN111405331A describes a method for updating the status of a Bluetooth Mesh device.

### SUMMARY

In view of this, embodiments of the present invention provide a heartbeat synchronization method, so that heartbeat messages of nodes in a Bluetooth mesh network are collectively sent to a provisioner within a specific time period, and the provisioner needs to scan, only within the time period, the heartbeat messages sent by the nodes in the Bluetooth mesh network. While it is ensured that heartbeat messages of all nodes in the Bluetooth mesh network are not missed, scanning duration of the provisioner is effectively reduced, air interface efficiency is improved, and power consumption overheads of the provisioner in the Bluetooth mesh network are reduced.

According to a first aspect, an embodiment of this application provides a heartbeat synchronization method, as defined in claim 1. In the foregoing setting manner, the second electronic device and the third electronic device may send a heartbeat message at an interval of a same heartbeat period. Therefore, the second electronic device and the third electronic device may collectively send heartbeat messages within one time range, thereby reducing a scanning time of the first electronic device, and reducing power consumption of the first electronic device.

In a possible implementation of the first aspect, after the first electronic device determines the heartbeat period of the second electronic device, the first electronic device sends a second message to the second electronic device, where the second message includes the heartbeat period of the second electronic device, and the second message is used to set the heartbeat period of the second electronic device.

According to any one of the first aspect or the implementations of the first aspect, before the first electronic device determines the heartbeat period of the second electronic device, the first electronic device receives the heartbeat message of the second electronic device; and that a first electronic device determines a heartbeat period of a second electronic device includes: The first electronic device obtains the heartbeat period of the second electronic device through measurement.

According to any one of the first aspect or the implementations of the first aspect, the heartbeat message of the third electronic device is sent based on the heartbeat period of the third electronic device.

According to any one of the first aspect or the implementations of the first aspect, the first electronic device does not receive the heartbeat message of the second electronic device and the heartbeat message of the third electronic device in the second time segment of the first working period.

According to any one of the first aspect or the implementations of the first aspect, before receiving the heartbeat message of the second electronic device, the first electronic device performs provisioning setting on the second electronic device.

According to any one of the first aspect or the implementations of the first aspect, before receiving the heartbeat message of the third electronic device, the first electronic device performs provisioning setting on the third electronic device.

According to any one of the first aspect or the implementations of the first aspect, the method further includes: The first electronic device receives the heartbeat message of the second electronic device; the first electronic device determines a second preset time; the first electronic device sends a third message to a fourth electronic device after the second preset time expires, where the third message is used to set a heartbeat period of the fourth electronic device, and the heartbeat period of the fourth electronic device is the same as the heartbeat period of the second electronic device; the first electronic device receives the heartbeat message of the third electronic device; and the first electronic device receives a heartbeat message of the fourth electronic device, where the first electronic device has a second working period, the second working period has a first time segment and a second time segment, the first electronic device is in a first working state in the first time segment of the second working period, the first electronic device is in a second working state in the second time segment of the second working period, power consumption in the first state is different from power consumption in the second state, and the first electronic device receives the heartbeat message of the second electronic device, the heartbeat message of the third electronic device, and the heartbeat message of the fourth electronic device in the first time segment of the second working period.

According to any one of the first aspect or the implementations of the first aspect, the heartbeat message of the fourth electronic device is sent based on the heartbeat period of the fourth electronic device.

According to any one of the first aspect or the implementations of the first aspect, the first electronic device does not receive the heartbeat message of the second electronic device, the heartbeat message of the third electronic device, and the heartbeat message of the fourth electronic device in the second time segment of the second working period.

According to any one of the first aspect or the implementations of the first aspect, before receiving the heartbeat message of the fourth electronic device, the first electronic device performs provisioning setting on the fourth electronic device.

According to any one of the first aspect or the implementations of the first aspect, the method is applied to a Bluetooth mesh network.

According to a comparative example, an embodiment of this application provides a heartbeat synchronization method, where the method includes: A provisioner performs provisioning setting on a first electronic device; the first electronic device sends a first heartbeat message, where the first heartbeat message is an advertising message sent by the first electronic device, and the first heartbeat message has a first heartbeat period; the provisioner receives the first heartbeat message from the first electronic device; the provisioner performs provisioning setting on a second electronic device; the first electronic device sends the first heartbeat message; the provisioner receives the first heartbeat message from the first electronic device; the second electronic device sends a second heartbeat message after a first preset time expires, where the second heartbeat message is an advertising message of the second electronic device, and the second heartbeat message has a second heartbeat period; and the provisioner receives the second heartbeat message from the second electronic device, where the first heartbeat period is the same as the second heartbeat period. In the foregoing setting manner, the second electronic device and the third electronic device may send a heartbeat message at an interval of a same heartbeat period. Therefore, the second electronic device and the third electronic device may collectively send heartbeat messages within one time range, thereby reducing a scanning time of the first electronic device, and reducing power consumption of the first electronic device.

In a possible implementation of the comparative example, after the first electronic device determines the heartbeat period of the second electronic device, the first electronic device sends a second message to the second electronic device, where the second message includes the heartbeat period of the second electronic device, and the second message is used to set the heartbeat period of the second electronic device.

According to any one of the comparative example or the implementations of the comparative example, before the first electronic device determines the heartbeat period of the second electronic device, the first electronic device receives the heartbeat message of the second electronic device; and that the first electronic device determines the heartbeat period of the second electronic device includes: The first electronic device obtains the heartbeat period of the second electronic device through measurement.

According to any one of the comparative example or the implementations of the comparative example, the heartbeat message of the third electronic device is sent based on the heartbeat period of the third electronic device.

According to any one of the comparative example or the implementations of the comparative example, the first electronic device does not receive the heartbeat message of the second electronic device and the heartbeat message of the third electronic device in the second time segment of the first working period.

According to any one of the comparative example or the implementations of the comparative example, before receiving the heartbeat message of the second electronic device, the first electronic device performs provisioning setting on the second electronic device.

According to any one of the comparative example or the implementations of the comparative example, before receiving the heartbeat message of the third electronic device, the first electronic device performs provisioning setting on the third electronic device.

According to any one of the comparative exampleor the implementations of the comparative example, the method further includes: The first electronic device receives the heartbeat message of the second electronic device; the first electronic device determines a second preset time; the first electronic device sends a third message to a fourth electronic device after the second preset time expires, where the third message is used to set a heartbeat period of the fourth electronic device, and the heartbeat period of the fourth electronic device is the same as the heartbeat period of the second electronic device; the first electronic device receives the heartbeat message of the third electronic device; and the first electronic device receives a heartbeat message of the fourth electronic device, where the first electronic device has a second working period, the second working period has a first time segment and a second time segment, the first electronic device is in a first state in the first time segment of the second working period, the first electronic device is in a second state in the second time segment of the second working period, power consumption in the first state is different from power consumption in the second state, and the first electronic device receives the heartbeat message of the second electronic device, the heartbeat message of the third electronic device, and the heartbeat message of the fourth electronic device in the first time segment of the second working period.

According to any one of the comparative example or the implementations of the comparative example, the heartbeat message of the fourth electronic device is sent based on the heartbeat period of the fourth electronic device.

According to any one of the comparative example or the implementations of the comparative example, the first electronic device does not receive the heartbeat message of the second electronic device, the heartbeat message of the third electronic device, and the heartbeat message of the fourth electronic device in the second time segment of the second working period.

According to any one of the comparative example or the implementations of the comparative example, before receiving the heartbeat message of the fourth electronic device, the first electronic device performs provisioning setting on the fourth electronic device.

According to any one of the comparative example or the implementations of the comparative example, the method is applied to a Bluetooth mesh network.

According to a second aspect, an embodiment of this application provides an electronic device, including one or more touchscreens, one or more memories, and one or more processors. The one or more memories store one or more computer programs. When the one or more processors execute the one or more computer programs, the electronic device is enabled to implement the method according to any one of the first aspect or the implementations of the first aspect.

According to a third aspect, an embodiment of this application provides a computer-readable storage medium, including instructions. When the instructions are run on an electronic device, the electronic device is enabled to perform the method according to any one of the first aspect or the implementations of the first aspect.

According to a fourth aspect, an embodiment of this application provides a computer program product. When the computer program product runs on an electronic device, the electronic device is enabled to perform the method according to any one of the first aspect or the implementations of the first aspect.

In the foregoing solutions, different nodes in a Bluetooth mesh network may collectively send heartbeat messages within one time threshold. The provisioner may centrally scan heartbeat messages of different nodes in the Bluetooth mesh network within the time range, and does not need to perform continuous scanning, thereby reducing power consumption of the provisioner.

### BRIEF DESCRIPTION OF DRAWINGS

To describe the technical solutions in embodiments of the present invention more clearly, the following briefly describes the accompanying drawings for describing embodiments. It is clear that the accompanying drawings in the following description show merely some embodiments of the present invention, and a person of ordinary skill in the art may derive other drawings from these accompanying drawings without creative efforts.
FIG. 1 is a schematic diagram of a heartbeat synchronization system according to an embodiment of this application;
FIG. 2 is a schematic diagram of a structure of an electronic device according to an embodiment of this application;
FIG. 3A and FIG. 3B are schematic diagrams of an application scenario of a heartbeat synchronization method according to an embodiment of this application;
FIG. 4A to FIG. 4F are schematic diagrams of a human-computer interaction interface according to an embodiment of this application;
FIG. 5A to FIG. 5E are schematic diagrams of a heartbeat synchronization method according to an embodiment of this application;
FIG. 6A is a schematic diagram of a heartbeat synchronization method according to an embodiment of this application;
FIG. 6B is a schematic diagram of a heartbeat synchronization method according to an embodiment of this application;
FIG. 7A is a schematic diagram of a heartbeat synchronization method according to an embodiment of this application;
FIG. 7B is a schematic diagram of a heartbeat synchronization method according to an embodiment of this application; and
FIG. 8 is a schematic diagram of a method for adding a device in a Bluetooth mesh network.

### DESCRIPTION OF EMBODIMENTS

Terms used in the following embodiments of this application are merely intended to describe specific embodiments, but are not intended to limit this application. The terms "one", "a", "the", "the foregoing", "this", and "the one" of singular forms used in this specification and the appended claims of this application are also intended to include plural forms such as "one or more", unless otherwise specified in the context clearly. It should be further understood that a term "and/or" used in this application indicates and includes any one or all of possible combinations of one or more listed items.

Reference to "an embodiment", "some embodiments", or the like described in this specification indicates that at least one embodiment of this application includes a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

According to the context, the term "when" used in the following embodiments may be interpreted as a meaning of "if", "after", "in response to determining", or "in response to detecting". Similarly, according to the context, the phrase "when it is determined that..." or "if (a stated condition or event) is detected" may be interpreted as a meaning of "if it is determined that...", "in response to determining...", "when (a stated condition or event) is detected", or "in response to detecting (a stated condition or event)".

In the specification, claims, and accompanying drawings of the present invention, the terms "first", "second", "third", "fourth", and so on (if any) are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein.

It should be understood that although terms such as "first electronic device" and "second electronic device" may be used to describe various electronic devices in this specification, these electronic devices shall not be limited by these terms. The terms are used to only distinguish an electronic device from another electronic device. For example, the first electronic device may be named a second electronic device and the second electronic device may be similarly named a first electronic device without departing from the scope of this application. Both the first electronic device and the second electronic device are electronic devices, but the first electronic device and the second electronic device may not be a same electronic device, or may be a same electronic device in some scenarios.

The following describes an electronic device (for example, a first electronic device or a second electronic device), a user interface used for such electronic device, and embodiments in which such electronic device is used. In some embodiments, the electronic device may be a portable electronic device that further includes other functions such as a personal digital assistant function and/or a music player function, for example, a mobile phone, a tablet computer, or a wearable electronic device having a wireless communication function (for example, a smartwatch). An example embodiment of the portable electronic device includes but is not limited to a portable electronic device using iOS^{®}, Android^{®}, Microsoft^{®}, or another operating system. The portable electronic device may be another portable electronic device, for example, a laptop (Laptop) computer having a touch panel or a touch-sensitive surface. In some other embodiments, the foregoing electronic device may be a desktop computer instead of a portable electronic device. It should be further understood that in some other embodiments, the electronic device may be a smart home device that is related to home life and that uses a cabling technology, a network communication technology, a security protection technology, an automatic control technology, or an audio and video technology, for example, a smart speaker, a router, a projector, a smart television, a smart screen, an air purifier, a lamp, a refrigerator, a washing machine, a microwave oven, or an air conditioner. The lamp may be lamps used in different home environments, for example, a bedroom lamp mounted in a bedroom, or a study lamp mounted in a study.

The following describes embodiments of this application with reference to the accompanying drawings in embodiments of this application. Clearly, the described embodiments are some but not all of embodiments of this application. All other embodiments obtained by a person skilled in the art based on embodiments of this application without creative efforts shall fall within the protection scope of this application.

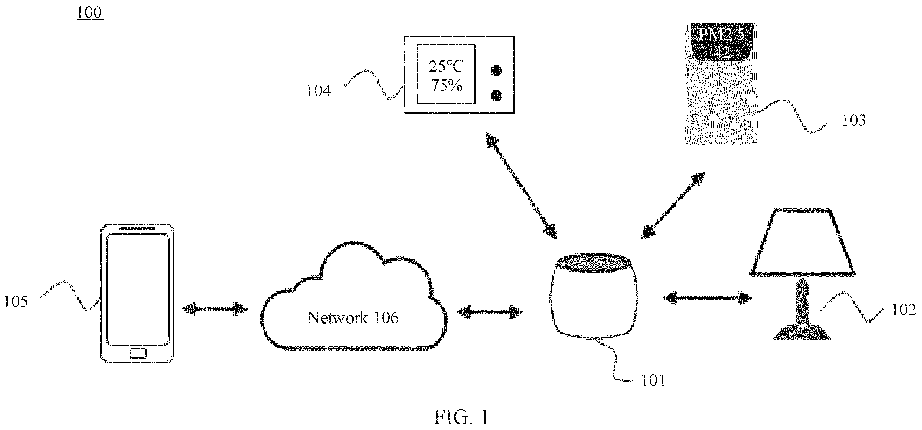

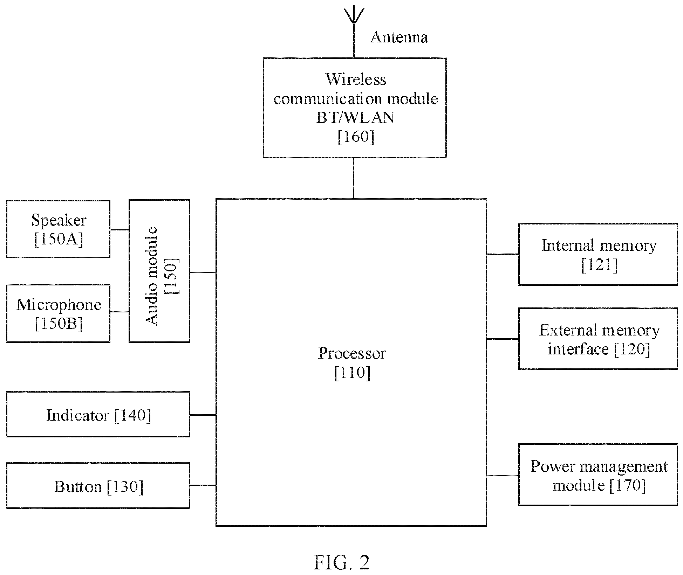

As shown in FIG. 1, an embodiment of this application provides a heartbeat synchronization system 100. The heartbeat synchronization system 100 may include one or more electronic devices, for example, a first electronic device (for example, an electronic device 101 in FIG. 1), a second electronic device (for example, an electronic device 102 in FIG. 1), and a third electronic device (for example, an electronic device 103 in FIG. 1). A specific structure of the electronic device 101 is described in detail with reference to FIG. 2 in a subsequent embodiment.

As shown in FIG. 1, the electronic device 101 may be (for example, in a wired or wireless manner) connected to an electronic device 105 in the heartbeat synchronization system 100 by using one or more networks 109. For example, the one or more communication networks 106 may be a local area network, or may be a wide area network (wide area network, WAN), for example, the internet. The one or more communication networks 109 may be implemented by using any known network communication protocol. The foregoing network communication protocol may be various wired or wireless communication protocols, for example, Ethernet, a universal serial bus (universal serial bus, USB), FireWire (FIREWIRE), a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution. LTE), Bluetooth, wireless fidelity (wireless fidelity, Wi-Fi), voice over internet protocol (Voice over Internet Protocol, VoIP), or any other suitable communication protocol. The electronic device 101 may be connected to the electronic device 102, the electronic device 103, and an electronic device 104 in the heartbeat synchronization system 100 by using Bluetooth. Bluetooth includes a classic Bluetooth (basic rate, BR) technology and a Bluetooth low energy (Bluetooth low energy, BLE) technology. For example, the electronic device 101 shown in FIG. 1 may be a smart speaker, the electronic device 102 may be a bedroom lamp, the electronic device 103 may be an air detector, the electronic device 104 may be a hygrothermograph, and the electronic device 105 may be a mobile phone. The smart speaker 101 may be connected to the bedroom lamp 102, the air detector 103, and the hygrothermograph 104 by using Bluetooth low energy. When the electronic devices are connected by using Bluetooth, the heartbeat synchronization system 100 may further include a provisioner (provisioner). The provisioner may also be referred to as a Bluetooth gateway. The Bluetooth gateway may be one of the electronic devices in the heartbeat synchronization system 100. For example, the electronic device 101 may be used as a Bluetooth gateway of the heartbeat synchronization system 100, or the electronic device 105 may be used as a Bluetooth gateway. The Bluetooth gateway may be configured to perform provisioning setting on another electronic device in the heartbeat synchronization system 100, to add the another electronic device to a Bluetooth mesh network, so that the another electronic device becomes a node in the Bluetooth mesh network. For example, the electronic device 101 may be used as a Bluetooth gateway to perform provisioning setting on the electronic device 102, the electronic device 103, and the electronic device 104.

It should be noted that, in addition to a smart speaker, the electronic device 101 in the heartbeat synchronization system 100 may be an electronic device that supports an audio/video service, for example, a mobile phone, a tablet computer, a notebook computer, a wearable electronic device (such as a smartwatch) with a wireless communication function, a virtual reality device, or another smart home device (such as a smart lamp, a smart television, a router, a projector, or an air purifier). A specific form of the electronic device 101 is specially not limited in the following embodiments. In addition to the bedroom lamp, the air detector, and the hygrothermograph, the electronic device 102, the electronic device 103, and the electronic device 104 in the heartbeat synchronization system 100 each may be another electronic device with a Bluetooth communication function, for example, devices such as an alarm, an intelligent lock, and a camera. A specific form of the electronic device is not specially limited in the following embodiments.

An example in which the electronic device 101 is a smart speaker is used below to describe the electronic device 101 in this application with reference to FIG. 2.

FIG. 2 is a schematic diagram of a structure of an electronic device 101 according to an embodiment of this application. As shown in FIG. 2, the electronic device 101 may include a processor 110, an external memory interface 120, an internal memory 121, a button 130, an indicator 140, an audio module 150, a speaker 150A, a microphone 150B, a wireless communication module 160, and a power management module 170.

It may be understood that the structure illustrated in this embodiment of the present invention does not constitute a specific limitation on the electronic device 101. In some other embodiments of this application, the electronic device 101 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that have or has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

The external memory interface 120 may be configured to connect to an external storage card, for example, a micro SD card, to expand a storage capability of the electronic device 101. The external memory card communicates with the processor 110 through the external memory interface 120, to implement a data storage function, for example, to store a file such as music or a video into the external storage card.

The internal memory 121 may be configured to store computer-executable program code. The executable program code includes instructions. The internal memory 121 may include a program storage area and a data storage area. The program storage area may store an operating system, an application required by at least one function (for example, a sound playing function or an image playing function), and the like. The data storage area may store data (such as audio data and a phone book) and the like that are created during use of the electronic device 101. In addition, the internal memory 121 may include a high-speed random access memory, and may further include a non-volatile memory such as at least one magnetic disk memory, a flash memory, or a universal flash storage (universal flash storage, UFS). The processor 110 runs the instructions stored in the internal memory 121 and/or the instructions stored in the memory disposed in the processor, to perform various function applications and data processing of the electronic device 101.

In this embodiment of this application, the internal memory 121 of the electronic device 101 may store an instruction used to implement the heartbeat synchronization method, so that the electronic device 101 can perform provisioning setting and heartbeat setting on electronic devices that are in the heartbeat synchronization system and that are connected to the electronic device 101 by using Bluetooth mesh, and the electronic devices that are connected to the electronic device 101 by using Bluetooth mesh can collectively send heartbeat messages to the electronic device 101 within one time range.

The button 130 includes a power button, a volume button, and the like. The button 130 may be a mechanical button, or may be a touch button. The electronic device 101 may receive button input, and generate a button signal input related to a user setting and function control of the electronic device 101.

The indicator 140 may be an indicator light, may be configured to indicate a charging state and a battery power change, and may be further configured to indicate a message, a missed call, a notification, and the like.

The electronic device 101 may implement an audio function by using the audio module 150, the speaker 150A, the microphone 150B, the application processor, and the like, for example, music playing or recording.

The audio module 150 is configured to convert digital audio information into an analog audio signal output, and is also configured to convert an analog audio input into a digital audio signal. The audio module 150 may be further configured to encode and decode an audio signal. In some embodiments, the audio module 150 may be disposed in the processor 110, or some functional modules in the audio module 150 are disposed in the processor 110.

A wireless communication function of the electronic device 101 may be implemented by using the wireless communication module 160. The wireless communication module 160 may provide a solution to wireless communication applied to the electronic device 101, for example, a wireless local area network (wireless local area network, WLAN) (for example, a wireless fidelity (wireless fidelity, Wi-Fi) network) and Bluetooth (Bluetooth, BT). The wireless communication module 160 may be one or more components that integrate at least one communication processing module. For example, in this embodiment of this application, the wireless communication module 160 may integrate at least one Bluetooth chip, or may integrate at least one radio frequency module. The wireless communication module 160 receives an electromagnetic wave by using an antenna, performs frequency modulation and filtering processing on an electromagnetic wave signal, and sends a processed signal to the processor 110. The wireless communication module 160 may further receive a to-be-sent signal from the processor 110, perform frequency modulation and amplification on the signal. and convert the signal into an electromagnetic wave for radiation by using the antenna.

In this embodiment of this application, BT in the wireless communication module 160 may include a classic Bluetooth (basic rate, BR) technology and a Bluetooth low energy (Bluetooth low energy, BLE) technology. The wireless communication module 160 may further support a Bluetooth mesh 1.0 protocol, so that the electronic device 101 can be used as a Bluetooth gateway in a Bluetooth mesh network to add another electronic device to the Bluetooth mesh network; or the electronic device 101 can receive, through scanning, a heartbeat message sent by a node in a Bluetooth mesh network. Scanning means that the processor 110 may send a heartbeat message scanning instruction to the Bluetooth chip. After receiving the heartbeat message scanning instruction, the Bluetooth chip executes the instruction, so that the antenna receives an electromagnetic wave signal corresponding to a heartbeat message.

The power management module 170 is configured to supply power to the processor 110. The power management module 170 receives an input of a power supply, and supplies power to the processor 110, the internal memory 121, the wireless communication module 160, and the like.

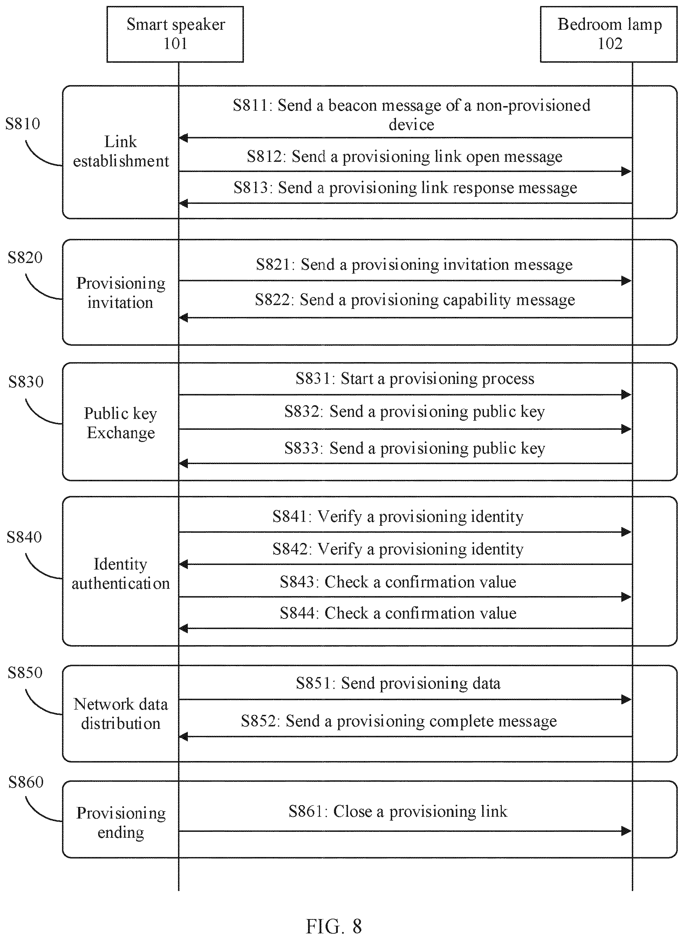

Based on the foregoing descriptions, the electronic device 101 may be used as a Bluetooth gateway in the heartbeat synchronization system 100 to perform provisioning setting on another electronic device in the heartbeat synchronization system 100. For example, the smart speaker 101 may perform provisioning setting on the bedroom lamp 102, to add the bedroom lamp 102 to the Bluetooth mesh network, so that the bedroom lamp 102 becomes a node in the Bluetooth mesh network. The provisioning setting method is described in detail with reference to FIG. 8, and details are not described herein. The smart speaker 101 may also perform provisioning setting on the air detector 103 and the hygrothermograph 104 in FIG. 1 by using the provisioning setting method shown in FIG. 8, so that the air detector 103 and the hygrothermograph 104 each become a node in the Bluetooth mesh network.

In some application scenarios, the Bluetooth gateway needs to determine whether a node in the Bluetooth mesh network is in an active state. For example, the smart speaker 101 serves as a role of the Bluetooth gateway, and needs to determine a status of a node in the Bluetooth mesh network, for example, determine whether the bedroom lamp 102 is in an online state or an offline state. Each node in the Bluetooth mesh network periodically sends an advertising message (advertising data, AD) to the Bluetooth gateway, and the Bluetooth gateway may determine a status of the node by scanning the AD sent by the node in the Bluetooth mesh network. The periodically sent AD is also referred to as a heartbeat message of the node in the Bluetooth mesh network. Scanning the heartbeat message may be implemented as follows: A timer is set to set a scanning time, and the timer starts timing. When the scanning time does not end, the processor 110 may send a heartbeat message scanning instruction to the Bluetooth chip, and the Bluetooth chip receives the heartbeat message scanning instruction, so that the antenna can receive an electromagnetic wave signal corresponding to a heartbeat message.

The Bluetooth gateway can set a heartbeat parameter of the node in the Bluetooth mesh network. The heartbeat parameter includes information such as a destination address (destination address for Heartbeat messages) and a heartbeat period (period for sending Heartbeat messages, PeriodLog) of a heartbeat message, and the heartbeat period is used to determine a time interval at which the node in the Bluetooth mesh network sends a heartbeat message to the provisioner. For example, when the Bluetooth gateway sets the heartbeat period of the node in the Bluetooth mesh network to one minute, the node in the Bluetooth mesh network sends a heartbeat message to the Bluetooth gateway at an interval of one minute.

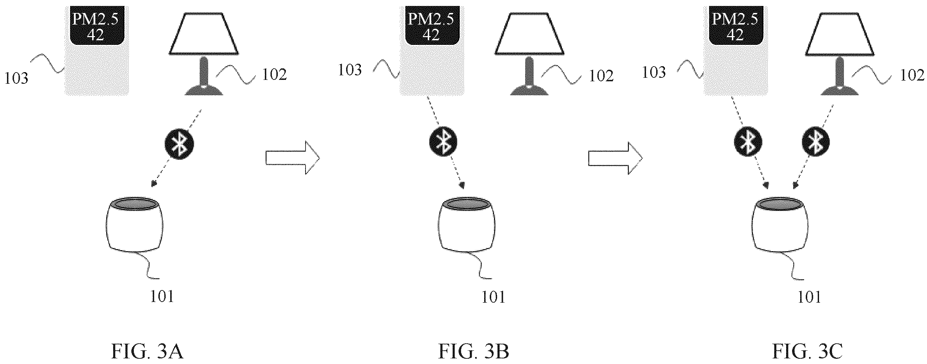

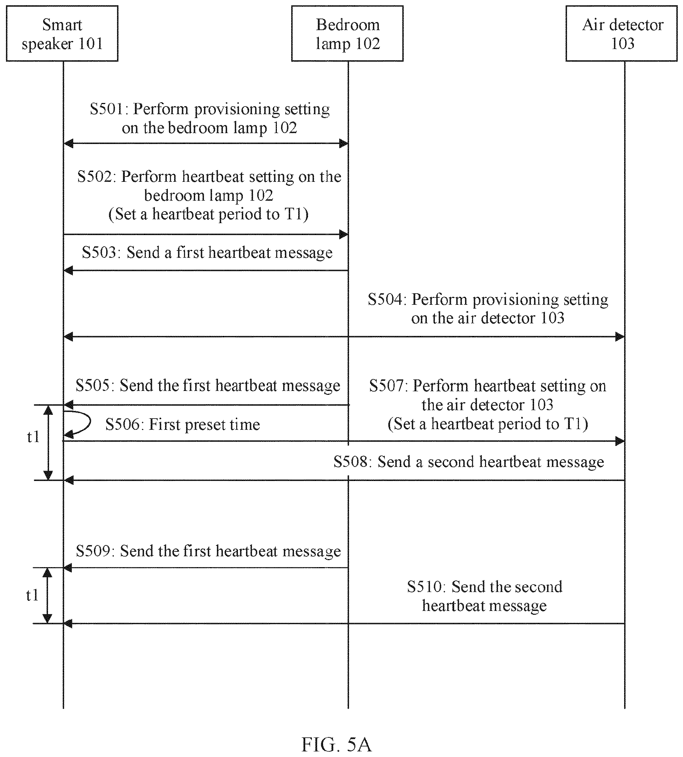

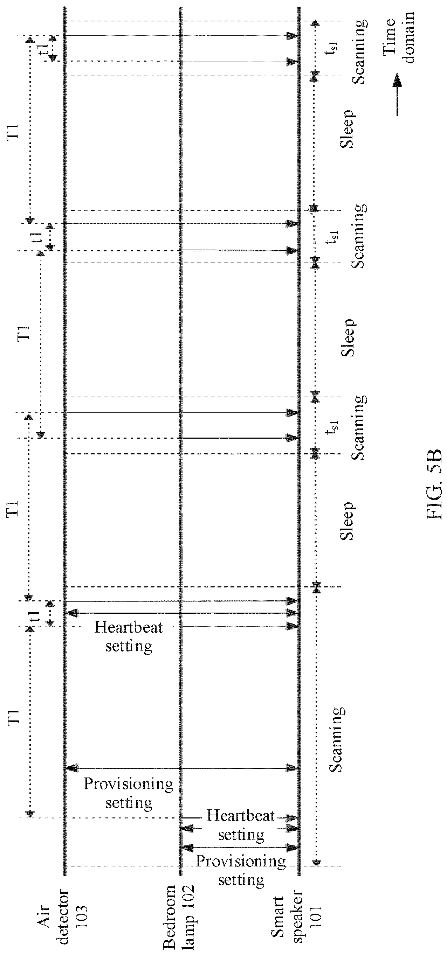

FIG. 3A to FIG. 3C are schematic diagrams of an application scenario of a heartbeat synchronization method according to an embodiment of this application. The Bluetooth gateway may perform heartbeat setting on another electronic device. An example in which the electronic device 101 is a smart speaker, the electronic device 102 is a bedroom lamp, the electronic device 103 is an air detector, and the electronic device 101 is used as a Bluetooth gateway is used for description. After the smart speaker 101 separately adds the bedroom lamp 102 and the air detector 103 to the Bluetooth mesh network, the smart speaker 101 may perform heartbeat setting on the bedroom lamp 102 and the air detector 103. After the smart speaker 101 performs heartbeat setting on the bedroom lamp 102 and the air detector 103, as shown in FIG. 3A and FIG. 3B, the bedroom lamp 102 and the air detector 103 each send a heartbeat message through broadcast. As a Bluetooth gateway, the smart speaker 101 may receive, through scanning, the heartbeat message sent by the bedroom lamp 102 and the air detector 103. As shown in FIG. 3C, after smart speaker 101 performs heartbeat setting on the bedroom lamp 102 and the air detector 103, the bedroom lamp 102 and the air detector 103 may further collectively send heartbeat messages within one time range, to implement an effect of heartbeat synchronization. The heartbeat setting method is described in detail with reference to FIG. 5A and FIG. 5B, and details are not described herein.

In some application scenarios, the user expects to control the smart speaker 101 by using a specific operation that is preset on the mobile phone 105 and that is used to control the smart speaker 101, to perform provisioning setting on another electronic device, and add the another electronic device to the Bluetooth mesh network. For example, the specific operation may be an input operation, for example, tapping a smart speaker icon. It may be understood that a person skilled in the art may set the preset operation based on an actual application scenario or actual experience. This is not limited in this embodiment.

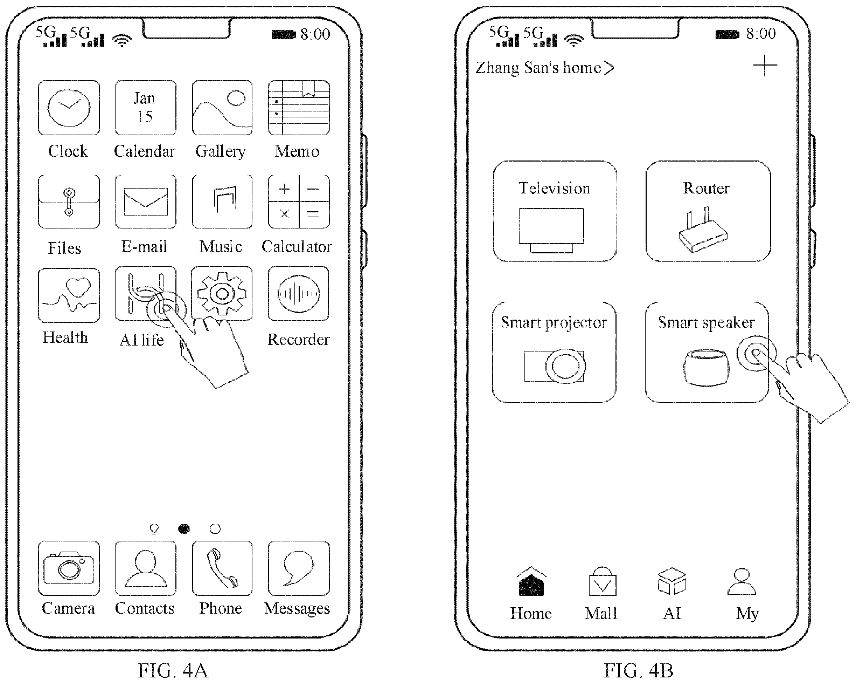

FIG. 4A to FIG. 4F are schematic diagrams of a human-computer interaction interface according to an embodiment of this application. FIG. 4A shows a display interface of the mobile phone 105. An AI Life application is installed on the mobile phone 105. The user may tap an icon of the AI Life application on the display screen shown in FIG. 4A. The display screen of the mobile phone 105 displays an interface shown in FIG. 4B. In the interface shown in FIG. 4B, a device that has been added by the user may be displayed. For example, a smart speaker icon and a text "smart speaker" are used to indicate that the smart speaker is added to the AI Life application, and the user may perform an operation on the added device.

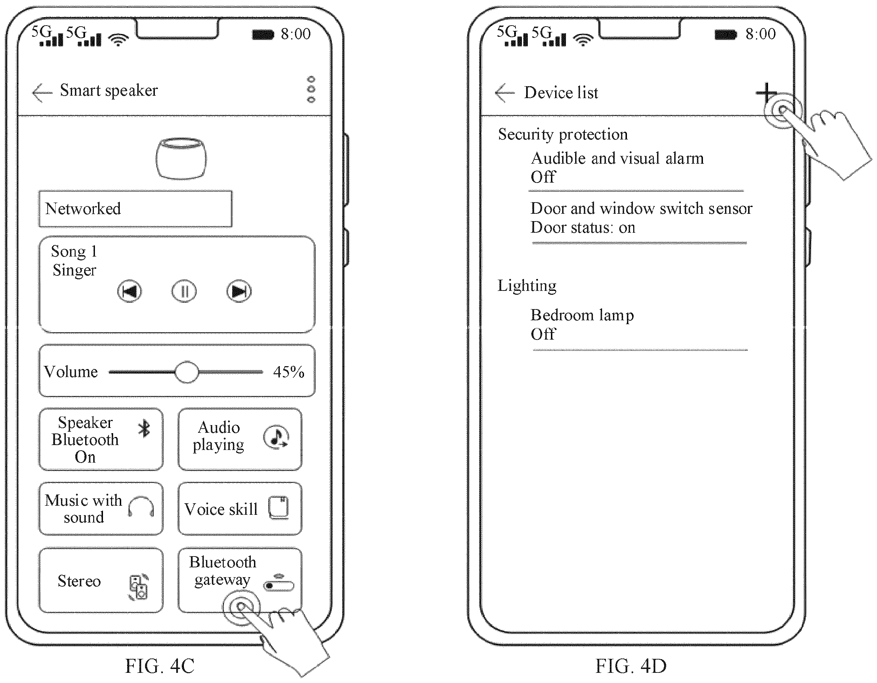

The user may tap the smart speaker icon in the interface shown in FIG. 4B, and the display screen of the mobile phone 105 displays an interface shown in FIG. 4C. In the interface shown in FIG. 4C, a function of the smart speaker may be displayed, for example, a stereo function and a Bluetooth gateway function. The user may tap an icon or a text corresponding to a corresponding function, to view the corresponding function or enter a setting interface of the corresponding function. For example, the user may tap a control corresponding to the Bluetooth gateway function in the interface shown in FIG. 4C, and the display screen of the mobile phone 105 displays an interface shown in FIG. 4D.

In a device list in the interface shown in FIG. 4D, a device that is added to the Bluetooth mesh network through provisioning setting when the smart speaker is used as a Bluetooth gateway may be displayed. Provisioning setting may be performed by using a provisioning setting method shown in FIG. 8. For example, after performing provisioning setting on an audible and visual alarm, the smart speaker adds the audible and visual alarm to the Bluetooth mesh network, and the audible and visual alarm is displayed in the device list shown in FIG. 4D. The interface shown in FIG. 4D may also display a status of the device that has been added to the Bluetooth mesh network, for example, whether the device is turned off or turned on. The user may further tap a plus sign icon in the interface shown in FIG. 4D, so that the smart speaker scans a device that can be added.

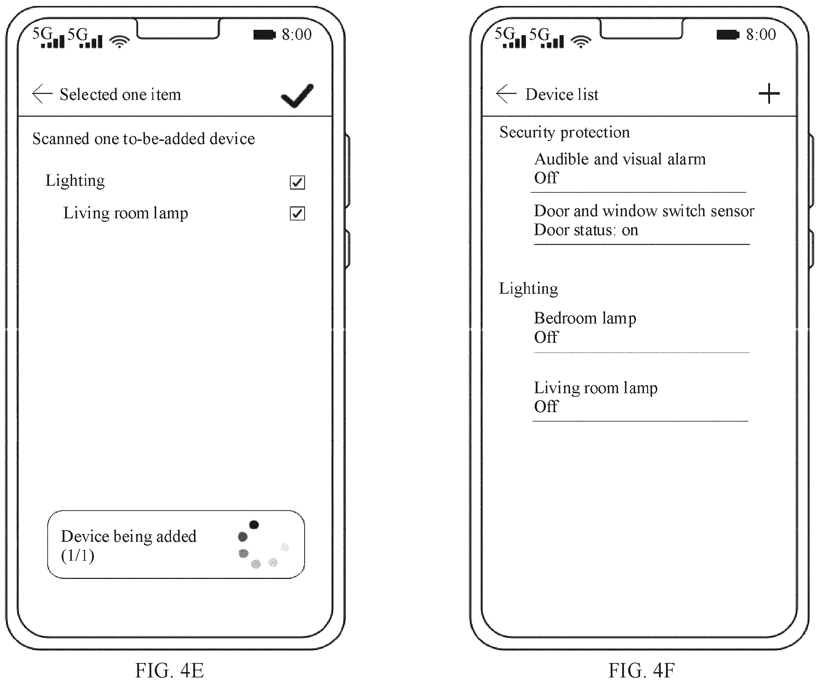

In an interface shown in FIG. 4E, a scanned device that can be added to the Bluetooth mesh network and a device type may be displayed. A box control may be correspondingly set for the scanned device and the device type, so that the user selects the device or a device of the device type. The user may select the scanned device in the interface shown in FIG. 4E, and the user may tap a displayed box icon. For example, the smart speaker obtains a living room lamp through scanning, and the device type is a lighting device. The user may tap a box control corresponding to the living room lamp. In this case, a tick icon shown in FIG. 4E appears in both the box icon corresponding to the living room lamp and the box icon corresponding to lighting. The tick icon that appears in the box is used to indicate that the living room lamp is selected and to be added. Further, after selecting the living room lamp, the user may tap a tick icon in the interface shown in FIG. 4E to add the selected device. For example, after selecting the living room lamp, the user taps the tick icon, and the smart speaker starts to perform provisioning setting on the living room lamp. The display screen of the mobile phone 105 may prompt the user that the device is being added. For example, a text "device being added" is displayed in the interface shown in FIG. 4E. After the smart speaker completes provisioning setting for the living room lamp, the living room lamp is added to the Bluetooth mesh network. In a device list in the interface shown in FIG. 4F, the added living room lamp is displayed, and a status of the living room lamp may be further displayed, for example, turned off.

FIG. 5A is a schematic diagram of a heartbeat synchronization method according to an embodiment of this application. The following describes the heartbeat synchronization method provided in this embodiment of this application with reference to FIG. 5A and FIG. 5B by using an example in which the smart speaker 101 is a Bluetooth gateway, the bedroom lamp 102 is a first electronic device, the air detector 103 is a second electronic device, and the smart speaker 101 performs provisioning setting and heartbeat setting on the bedroom lamp 102 and the air detector 103.

As shown in FIG. 5A, the heartbeat synchronization method may include the following steps:
Step S501: The smart speaker 101 performs provisioning setting on the bedroom lamp 102.

The provisioning setting process may be a process executed in step S810 to step S860 shown in FIG. 8. The provisioning setting method is described in detail with reference to FIG. 8, and details are not described herein.

Step S502: After completing provisioning setting for the bedroom lamp 102, the smart speaker 101 performs heartbeat setting for the bedroom lamp 102. Heartbeat setting includes setting a heartbeat period of the bedroom lamp 102 to T1.

Step S503: After the smart speaker 101 completes heartbeat setting for the bedroom lamp 102, the bedroom lamp 102 sends a first heartbeat message to the smart speaker 101.

It may be understood that duration of the heartbeat period T1 of the bedroom lamp 102 is not specially limited herein. Optionally, the heartbeat period T1 of the bedroom lamp 102 may be one minute, two minutes, or one hour, or may be 0.1 ms, 1 ms, or 10 ms.

Step S504: The smart speaker 101 performs provisioning setting on the air detector 103. The provisioning setting process may be a process executed in step S810 to step S860 shown in FIG. 8.

It may be understood that step S504 may be completed after step S501 and before step S502.

Step S505: The bedroom lamp 102 sends the first heartbeat message to the smart speaker 101.

After the smart speaker 101 completes heartbeat setting for the bedroom lamp 102, as shown in FIG. 5B, the bedroom lamp 102 sends the first heartbeat message to the smart speaker 101 at an interval of one heartbeat period T1.

Step S506: When the smart speaker 101 receives the first heartbeat message sent by the bedroom lamp 102, a first preset time expires. That the first preset time expires may be as follows: A timer is set. The smart speaker 101 receives the first heartbeat information, and the timer starts timing. After the first preset time expires, heartbeat setting is performed on the air detector 103.

It should be explained and noted that, for ease of description, step S506 is shown in the accompanying drawings. Step S506 may not exist, and that the first preset time expires may be implemented in another possible manner.

The first preset time may be randomly generated by the smart speaker 101, and the randomly generated time range may be a time from 0 milliseconds to 50 milliseconds, 0 milliseconds to 100 milliseconds, 0 milliseconds to 200 milliseconds, 0 milliseconds to 300 milliseconds, 10 milliseconds to 50 milliseconds, or 30 milliseconds to 50 milliseconds, or 50 milliseconds to 100 milliseconds. The first preset time may be set by a user, or may be a default set value of the smart speaker 101.

Step S507: The smart speaker 101 performs heartbeat setting on the air detector 103. Heartbeat setting includes setting a heartbeat period of the air detector 103 to T1.

The heartbeat period T1 of the air detector 103 is equal to the heartbeat period T1 of the bedroom lamp 102.

Step S508: After the smart speaker 101 completes heartbeat setting for the air detector 103, the air detector 103 sends a second heartbeat message to the smart speaker 101.

It may be understood that duration of the heartbeat period T1 of the air detector 103 is not specially limited herein. Optionally, the heartbeat period T1 of the air detector 103 may be one minute, two minutes, or one hour, or may be 0.1 ms, 1 ms, or 10 ms.

Step S509: The bedroom lamp 102 sends the first heartbeat message to the smart speaker 101.

A time interval between step S509 and step S505 is T1.

Step S510: The air detector 103 sends the second heartbeat message to the smart speaker.

After the smart speaker 101 completes heartbeat setting for the air detector 103, as shown in FIG. 5B, the air detector 103 sends the second heartbeat message to the smart speaker 101 at an interval of one heartbeat period T1. A time interval between step S510 and step S508 is T1.

A time interval between step S510 and step S509 is equal to a time interval between step S508 and step S505.

Referring to FIG. 5B, for ease of description, the time interval between step S508 and step S505 is represented as t1, and the time interval between step S510 and step S509 may also be represented as t1. With the foregoing step S501 to step S507, the bedroom lamp 102 and the air detector 103 may achieve an effect of heartbeat synchronization. For example, as shown in FIG. 5B, the bedroom lamp 102 and the air detector 103 may synchronously and periodically send heartbeat messages to the smart speaker 101. It should be explained and noted that, the foregoing heartbeat synchronization means that the bedroom lamp 102 and the air detector 103 may collectively send heartbeat messages to the smart speaker 101 within a first time threshold. The first time threshold is equal to the time interval t1 between step S505 and step S508, and is also equal to the time interval t1 between step S510 and step S509. The first time threshold includes a time in which the bedroom lamp 102 performs step S505, the first preset time, a time in which the smart speaker 101 performs step S507, and a time in which the air purifier 105 performs step S508 after the smart speaker 101 completes heartbeat setting for the air purifier 105. By using the foregoing heartbeat setting method, the smart speaker 101 may centrally scan, within one scanning time segment tₛ₁, the heartbeat messages sent by the bedroom lamp 102 and the air detector 103. tₛ₁ may be equal to the first time threshold, or may be greater than the first time threshold. When the bedroom lamp 102 and the air detector 103 send no heartbeat message, the smart speaker 101 may be in a sleep state. In the sleep state, the smart speaker 101 does not scan the heartbeat messages of the bedroom lamp 102 and the air detector 103. For example, after the smart speaker 101 completes heartbeat setting for the bedroom lamp 102 and the air detector 103 by using the foregoing heartbeat setting method, the scanning time segment tₛ₁ and the sleep time segment tₓ may be set by using a timer. The timer starts timing. If the sleep time segment tₓ ends, the processor 110 may send an instruction for starting scanning a heartbeat message to a Bluetooth chip of the smart speaker 101, and the Bluetooth chip executes the instruction. Within the scanning time segment tₛ₁, the antenna may receive electromagnetic wave signals corresponding to the heartbeat messages of the bedroom lamp 102 and the air detector 103. For example, the heartbeat message is received on three broadcast channels corresponding to Bluetooth low energy. If the scanning time segment tₛ₁ ends, the processor 110 may send an instruction for stopping scanning a heartbeat message to the Bluetooth chip of the smart speaker 101, and the Bluetooth chip receives the instruction, and executes the instruction, so that the heartbeat messages of the bedroom lamp 102 and the air detector 103 are not received, to switch the smart speaker 101 to a sleep state. For example, the foregoing process may be implemented by using the following instruction: 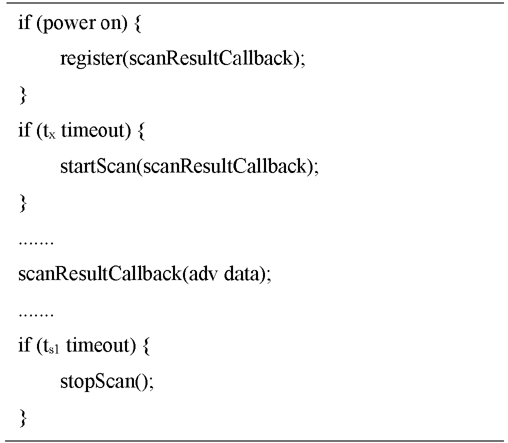 where if (power on) is used to determine whether the speaker 101 is powered on, and if the speaker is powered on, register(scanResultCallback) is executed to register a scanning result callback function; the scanning result callback function scanResultCallback(adv data) is used to return a heartbeat message obtained through scanning; if (tₓ timeout) is used to determine whether the sleep time segment ends, and if the sleep time segment ends, the Bluetooth chip executes startScan(scanResultCallback). to start to scan the heartbeat message, and return, to the processor, the heartbeat message obtained through scanning; and if (tₛ₁ timeout) is used to determine whether the scanning time segment ends, and if the scanning time segment ends, the Bluetooth chip executes stopScan() to stop scanning the heartbeat message.

It should be noted that, in the sleep time segment, the speaker 101 may be in a low power state. The low power state may be implemented as follows: A frequency of a radio frequency module is reduced, and when the frequency of the radio frequency module is reduced to a value lower than a working frequency of the radio frequency module, the radio frequency module cannot work, thereby reducing power consumption of the radio frequency module; or a voltage of the radio frequency module is reduced, and when the voltage of the radio frequency module is reduced to a value lower than a working voltage of the radio frequency module, the radio frequency module cannot work, thereby reducing power consumption of the radio frequency module; or the radio frequency module is powered off, or a corresponding BLE Bluetooth low energy module in the Bluetooth chip is powered off, thereby reducing power consumption of the chip.

For example, as shown in FIG. 5B, the smart speaker 101 may scan, within the scanning time segment tₛ, the heartbeat messages sent by the bedroom lamp 102 and the air detector 103. When the bedroom lamp 102 and the air detector 103 do not collectively send heartbeat messages, the smart speaker 101 is in a sleep state.

It should be explained and noted that, when the smart speaker 101 does not complete heartbeat setting for the bedroom lamp 102 and the air detector 103, the smart speaker 101 may be always in a scanning state. When the smart speaker 101 completes heartbeat setting for the bedroom lamp 102 and the air detector 103, the smart speaker 101 may scan the heartbeat messages of the bedroom lamp 102 and the air detector 103 within the scanning time segment by setting the scanning time segment and the sleep time segment. In the sleep time segment, the smart speaker does not scan the heartbeat messages of the bedroom lamp 102 and the air detector 103.

In the foregoing heartbeat synchronization method, the Bluetooth gateway performs heartbeat setting on the first electronic device, and performs heartbeat setting on the second electronic device after the Bluetooth gateway receives the first heartbeat message sent by the first electronic device and the first preset time expires. In addition, the Bluetooth gateway sets a same heartbeat period for the first electronic device and the second electronic device. In the heartbeat synchronization method, the first electronic device and the second electronic device may collectively send heartbeat messages to the Bluetooth gateway within the first time threshold, to achieve an effect of heartbeat synchronization. In this way, the Bluetooth gateway may centrally scan the heartbeat messages of the first electronic device and the second electronic device within the scanning time segment tₛ, and when the first electronic device and the second electronic device send no heartbeat message, the Bluetooth gateway may be switched to a sleep state, and does not scan the heartbeat messages of the first electronic device and the second electronic device, thereby reducing power consumption of the Bluetooth gateway.

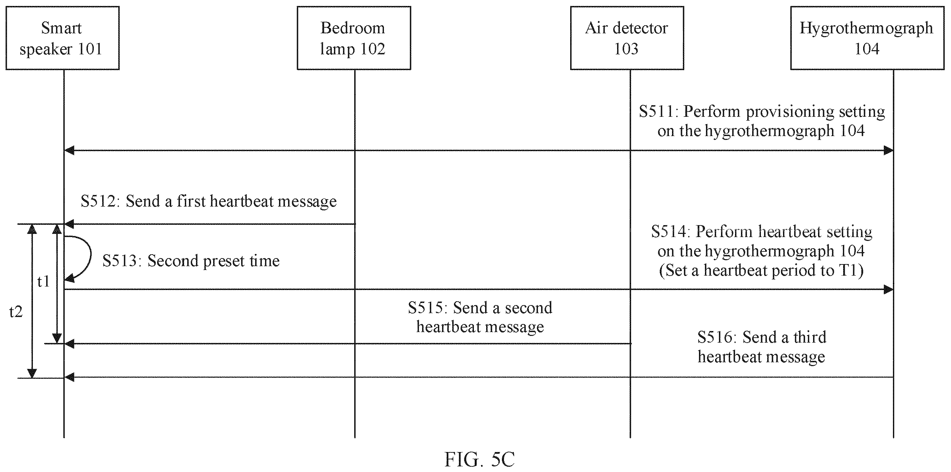

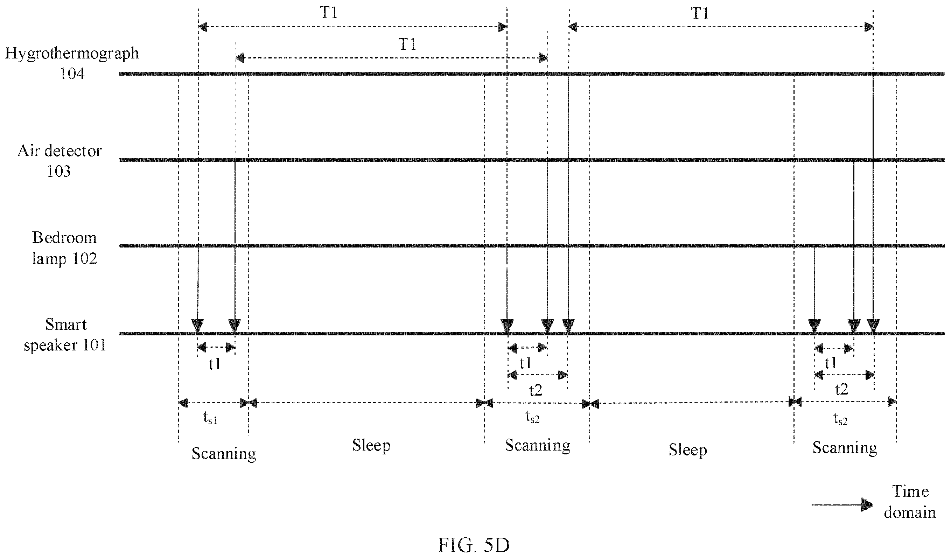

In some embodiments, after the Bluetooth gateway performs the heartbeat setting method, so that the first electronic device and the second electronic device achieve an effect of heartbeat synchronization, the Bluetooth gateway may further perform heartbeat setting on a third electronic device, so that the first electronic device, the second electronic device, and the third electronic device achieve an effect of heartbeat synchronization. With reference to FIG. 5C and FIG. 5D, an example in which the Bluetooth gateway is the smart speaker 101, the first electronic device is the bedroom lamp 102, the second electronic device is the air detector 103, and the third electronic device is the hygrothermograph 104 is used for description below.

Referring to FIG. 5C, step S511 to step S516 may be steps after step S510 in FIG. 5A.

Step S511: The smart speaker 101 performs provisioning setting on the hygrothermograph 104. The provisioning setting process may be a process executed in step S810 to step S860 shown in FIG. 8, and details are not described herein.

Step S512: The bedroom lamp 102 sends a first heartbeat message to the smart speaker 101.

Step S513: When the smart speaker 101 receives the first heartbeat message sent by the bedroom lamp 102, a second preset time expires.

That the second preset time expires may be as follows: A timer is set. The smart speaker receives the first heartbeat information, and the timer starts timing. After the second preset time expires, heartbeat setting is performed on the hygrothermograph 104. It should be explained and noted that, for ease of description, step S513 is shown in the accompanying drawings. Step S513 may not exist, and that the first preset time expires may be implemented in another possible manner.

The second preset time may be randomly generated by the smart speaker 101, and the randomly generated time range may be a time from 0 milliseconds to 50 milliseconds, 0 milliseconds to 100 milliseconds, 0 milliseconds to 200 milliseconds, 0 milliseconds to 300 milliseconds, 10 milliseconds to 50 milliseconds, or 30 milliseconds to 50 milliseconds, or 50 milliseconds to 100 milliseconds. The second preset time may be set by a user, or may be a default set value of the smart speaker 101.

Step S514: The smart speaker 101 performs heartbeat setting on the hygrothermograph 104. Heartbeat setting includes setting a heartbeat period of the hygrothermograph 104 to T1.

The heartbeat period T1 of the hygrothermograph 104 is equal to a heartbeat period T1 of the bedroom lamp 102 and a heartbeat period T1 of the air detector 103.

Step S515: The air detector 103 sends a second heartbeat message to the smart speaker 101.

A time interval between step S515 and step S512 is equal to a time interval between step S508 and step S505, and is also equal to a time interval between step S510 and step S509.

Step S516: The hygrothermograph 104 sends a third heartbeat message to the smart speaker 101. As shown in FIG. 5D, the hygrothermograph 104 sends the third heartbeat message to the smart speaker 101 at an interval of one heartbeat period T1.

Referring to FIG. 5D, for ease of description, the time interval between step S515 and step S512 may be represented as t1, and a time interval between step S516 and step S512 may be represented as t2. When heartbeat setting is not completed for the hygrothermograph 104, the smart speaker 101 centrally scans, within a scanning time segment tₛ₁, the heartbeat messages sent by the bedroom lamp 102 and the air detector 103. It should be explained and noted that the scanning time segment tₛ₁ may be the same as the scanning time segment tₛ₁ in FIG. 5B.

With the foregoing step S511 to step S514. after the smart speaker 101 completes heartbeat setting for the hygrothermograph 104, the bedroom lamp 102, the air detector 103, and the hygrothermograph 104 may achieve an effect of heartbeat synchronization. For example, as shown in FIG. 5D, the bedroom lamp 102, the air detector 103, and the hygrothermograph 104 may synchronously and periodically send heartbeat messages to the smart speaker 101. It should be explained and noted that, the foregoing heartbeat synchronization means that the bedroom lamp 102, the air detector 103, and the hygrothermograph 104 may collectively send heartbeat messages to the smart speaker 101 within a second time threshold. The second time threshold is equal to the time interval t2 between step S516 and step S512. The second time threshold includes a time in which the bedroom lamp 102 performs step S512, the second preset time, a time in which the smart speaker 101 performs step S514, a time in which the air detector 103 performs step S515, and a time in which the hygrothermograph 104 performs step S516 after the smart speaker 101 completes heartbeat setting for the hygrothermograph 104.

By using the foregoing heartbeat setting method, the smart speaker 101 may centrally scan, within a scanning time segment tₛ₂, the heartbeat messages sent by the bedroom lamp 102, the air detector 103, and the hygrothermograph 104. When the bedroom lamp 102, the air detector 103, and the hygrothermograph 104 send no heartbeat message, the smart speaker 101 may be in a sleep state. In the sleep state, the smart speaker 101 does not scan the heartbeat messages of the bedroom lamp 102, the air detector 103, and the hygrothermograph 104. tₛ₂ may be equal to the second time threshold, or may be greater than the second time threshold. For example, after the smart speaker 101 completes heartbeat setting for the hygrothermograph 104 by using the foregoing heartbeat setting method, the scanning time segment tₛ₂ and the sleep time segment may be set by using a timer. The timer starts timing. If the sleep time segment tₓ ends, the processor 110 may send an instruction for starting scanning a heartbeat message to a Bluetooth chip of the smart speaker 101, and the Bluetooth chip executes the instruction. Within the scanning time segment tₛ₂, the antenna may receive electromagnetic wave signals corresponding to the heartbeat messages of the bedroom lamp 102, the air detector 103, and the hygrothermograph 104. If the scanning time segment tₛ₂ ends, the processor 110 may send an instruction for stopping scanning a heartbeat message to the Bluetooth chip of the smart speaker 101, and the Bluetooth chip receives the instruction, and executes the instruction, so that the heartbeat messages of the bedroom lamp 102, the air detector 103, and the hygrothermograph 104 are not received, to switch the smart speaker 101 to a sleep state.

In the foregoing heartbeat synchronization method, the Bluetooth gateway completes heartbeat setting for the first electronic device and the second electronic device, so that after the first electronic device and the second electronic device achieve an effect of heartbeat synchronization, the heartbeat message sent by the first electronic device is received. After the second preset time expires, heartbeat setting is performed on the third electronic device. In addition, the Bluetooth gateway sets, for the third electronic device, a same heartbeat period as those of the first electronic device and the second electronic device. In the heartbeat synchronization method, the first electronic device, the second electronic device, and the third electronic device may collectively send heartbeat messages to the Bluetooth gateway within the second time threshold, to achieve an effect of heartbeat synchronization. In this way, the Bluetooth gateway may scan the heartbeat messages of the first electronic device, the second electronic device, and the third electronic device within the scanning time segment tₛ₂, and when the first electronic device, the second electronic device, and the third electronic device send no heartbeat message, the Bluetooth gateway may be switched to a sleep state, and does not scan the heartbeat messages of the first electronic device, the second electronic device, and the third electronic device, thereby reducing power consumption of the Bluetooth gateway.

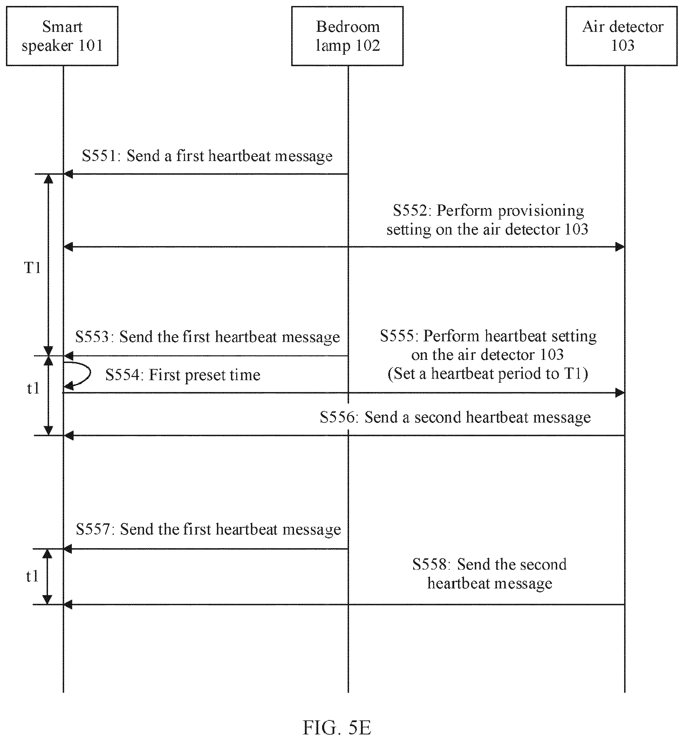

In some embodiments, the Bluetooth gateway may receive a heartbeat message of a node in a Bluetooth mesh network, obtain a heartbeat period of the node, and perform heartbeat setting on another node in the Bluetooth mesh network by using the heartbeat period, so that heartbeat synchronization is implemented for nodes in the Bluetooth mesh network. For example, referring to FIG. 5E, an example in which the Bluetooth gateway is the smart speaker 101, the first electronic device is the bedroom lamp 102, and the second electronic device is the air detector 103 is used for description.

As shown in FIG. 5E, the heartbeat synchronization method may include the following steps:
Step S551: The bedroom lamp 102 sends a heartbeat message to the smart speaker 101.

Before the bedroom lamp 102 sends the heartbeat message to the smart speaker 101, provisioning setting and heartbeat setting have been completed. The bedroom lamp 102 may send provisioning setting information and heartbeat setting information of the bedroom lamp 102 to the smart speaker 101 by using a network 106. The provisioning setting information may include a device identifier (for example, a MAC address) of the bedroom lamp 102. The device identifier is used to uniquely identify an electronic device, so that another electronic device or a server in a network identifies the electronic device. A common device identifier includes an international mobile equipment identity (international mobile equipment identity, IMEI), an international mobile subscriber identity (international mobile subscriber identification number, IMSI), a mobile equipment identifier (mobile equipment identifier, MEID), a serial number (serial number, SN), an integrated circuit card identifier (Integrate circuit card identity, ICCID), a media access control (media access control, MAC) layer address, another identifier that can uniquely identify an electronic device, or the like. In this way, the smart speaker 101 may identify the bedroom lamp 102 by using the device identifier of the bedroom lamp 102, and can receive the heartbeat message of the bedroom lamp 102. The heartbeat setting information may include a heartbeat period T1 of the bedroom lamp 102. In this way, the smart speaker 101 may obtain the heartbeat period T1 of the bedroom lamp 102.

Step S552: The smart speaker 101 performs provisioning setting on the air detector 103. The provisioning setting process may be a process executed in step S810 to step S860 shown in FIG. 8, and details are not described herein.

Step S553: The bedroom lamp 102 sends the first heartbeat message to the smart speaker 101.

After receiving the first heartbeat message sent by the bedroom lamp 102 in step S553, the smart speaker 101 may also obtain a time interval between step S553 and step S551 through measurement, to obtain the heartbeat period T1 of the bedroom lamp 102.

Step S554 may be performed as a same step as step S506 in FIG. 5A, and details are not described herein again.

Step S555: The smart speaker 101 performs heartbeat setting on the air detector 103. Heartbeat setting includes setting a heartbeat period of the hygrothermograph 104 to T1. T1 may be obtained by the smart speaker 101 by using the heartbeat setting information, or may be obtained by the smart speaker through measurement by receiving the first heartbeat messages sent by the bedroom lamp 102 in step S551 and step S553.

Step S556 to step S558 may be performed as same steps as step S508 to step S510 in FIG. 5A, and details are not described herein again.

In some embodiments, the Bluetooth gateway may perform heartbeat setting on three nodes in the Bluetooth mesh network, to implement heartbeat synchronization for the three nodes in the Bluetooth mesh network.

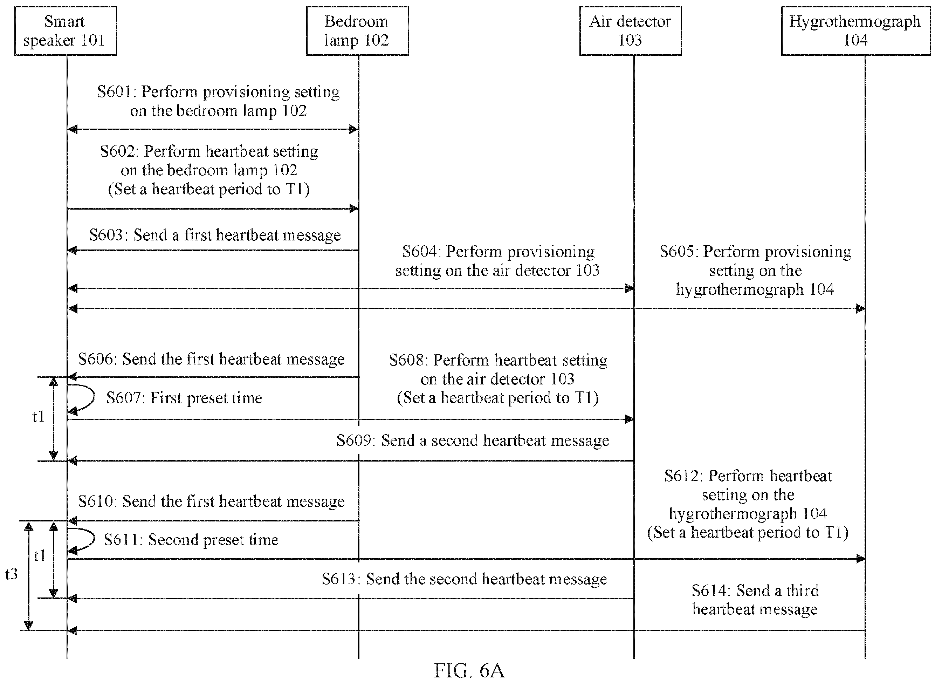

For example, referring to FIG. 6A, an example in which the Bluetooth gateway is the smart speaker 101, the first electronic device is the bedroom lamp 102, the second electronic device is the air detector 103, the third electronic device is the hygrothermograph 104, and the smart speaker 101 performs provisioning setting and heartbeat setting on the bedroom lamp 102, the air detector 103, and the hygrothermograph 104 is used for description. The heartbeat synchronization method may include the following steps:
Step S601: The smart speaker 101 performs provisioning setting on the bedroom lamp 102.

The provisioning setting process may be a process executed in step S810 to step S860 shown in FIG. 8, and details are not described herein.

Step S602: After completing provisioning setting for the bedroom lamp 102, the smart speaker 101 performs heartbeat setting for the bedroom lamp 102. Heartbeat setting includes setting a heartbeat period of the bedroom lamp 102 to T1.

It may be understood that duration of the heartbeat period T1 of the bedroom lamp 102 is not specially limited herein. Optionally, the heartbeat period T1 of the bedroom lamp 102 may be one minute, two minutes, or one hour, or may be 0.1 ms, 1 ms, or 10 ms.

Step S603: After the smart speaker 101 completes heartbeat setting for the bedroom lamp 102, the bedroom lamp 102 sends a first heartbeat message to the smart speaker 101.

Step S604: The smart speaker 101 performs provisioning setting on the air detector 103. The provisioning setting process may be a process executed in step S810 to step S860 shown in FIG. 8, and details are not described herein.

It may be understood that step S604 may be completed after step S601 and before step S602.

Step S605: The smart speaker 101 performs provisioning setting on the hygrothermograph 104. The provisioning setting process may be a process executed in step S810 to step S860 shown in FIG. 8, and details are not described herein.

It may be understood that step S605 may be completed after step S601 and before step S602.

Step S606: The bedroom lamp 102 sends the first heartbeat message to the smart speaker 101.

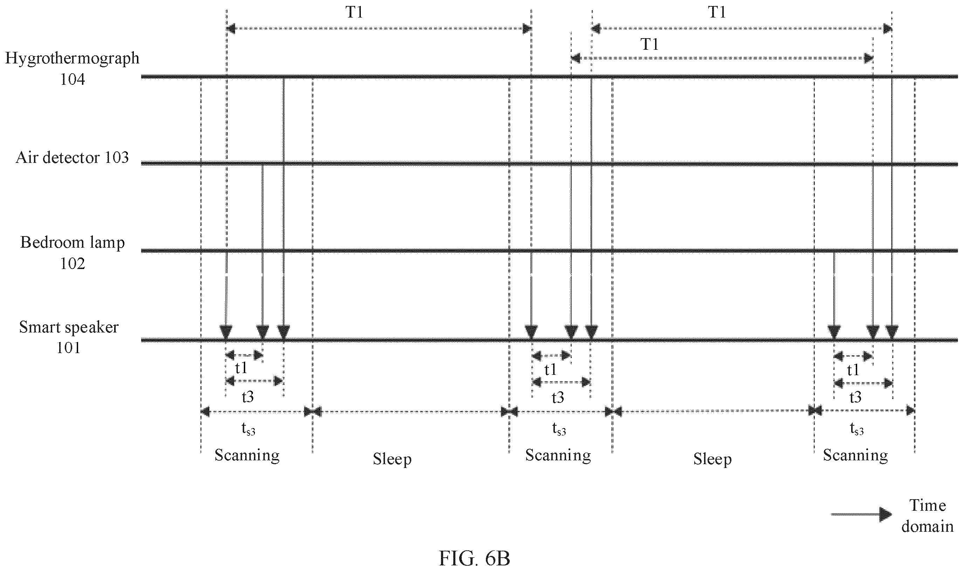

After the smart speaker 101 completes heartbeat setting for the bedroom lamp 102, as shown in FIG. 6B, the bedroom lamp 102 sends the first heartbeat message to the smart speaker 101 at an interval of one heartbeat period T1.

Step S607 and step S608 may be performed as a same process as step S506 and step S507.

A heartbeat period T1 of the air detector 103 is equal to the heartbeat period T1 of the bedroom lamp 102.

Step S609: After the smart speaker 101 completes heartbeat setting for the air detector 103, the air detector 103 sends a second heartbeat message to the smart speaker 101.

Step S610: The bedroom lamp 102 sends the first heartbeat message to the smart speaker 101.

As shown in FIG. 6B, a time interval between step S610 and step S606 is T1.

Step S611: When the smart speaker 101 receives the first heartbeat message sent by the bedroom lamp 102, a second preset time expires.

That the second preset time expires may be as follows: A timer is set. The smart speaker receives the first heartbeat information, and the timer starts timing. After the second preset time expires, heartbeat setting is performed on the hygrothermograph 104.

It should be explained and noted that, for ease of description, step S611 is shown in the accompanying drawings. Step S611 may not exist, and that the first preset time expires may be implemented in another possible manner.

The second preset time may be randomly generated by the smart speaker 101, and the randomly generated time range may be a time from 0 milliseconds to 50 milliseconds, 0 milliseconds to 100 milliseconds, 0 milliseconds to 200 milliseconds, 0 milliseconds to 300 milliseconds, 10 milliseconds to 50 milliseconds, or 30 milliseconds to 50 milliseconds, or 50 milliseconds to 100 milliseconds. The second preset time may be set by a user, or may be a default set value of the smart speaker 101.

Step S612: The smart speaker 101 performs heartbeat setting on the hygrothermograph 104. Heartbeat setting includes setting a heartbeat period of the hygrothermograph 104 to T1.

The heartbeat period T1 of the hygrothermograph 104 is equal to the heartbeat period T1 of the bedroom lamp 102 and the heartbeat period T1 of the air detector 103.

Step S613: The air detector 103 sends the second heartbeat message to the smart speaker.

After the smart speaker 101 completes heartbeat setting for the air detector 103, as shown in FIG. 6B, the air detector 103 sends the second heartbeat message to the smart speaker 101 at an interval of one heartbeat period T1. A time interval between step S613 and step S609 is T1. A time interval between step S613 and step S610 is equal to a time interval between step S609 and step S606.

Step S614: After the smart speaker 101 completes heartbeat setting for the hygrothermograph 104, the hygrothermograph 104 sends a third heartbeat message to the smart speaker 101. After the smart speaker 101 completes heartbeat setting for the hygrothermograph 104, as shown in FIG. 6B, the hygrothermograph 104 sends the third heartbeat message to the smart speaker 101 at an interval of one heartbeat period T1.

It should be explained and noted that, as shown in FIG. 6A, for ease of description, t3 is used to represent a time interval between step S614 and step S610. The time interval t3 between step S614 and step S610 includes a sum of a time in which the bedroom lamp 102 performs step S610, the second preset time, a time in which the smart speaker 101 performs step S612, a time in which the air detector 103 performs step S613, and a time in which the hygrothermograph 104 performs step S614 after the smart speaker 101 completes heartbeat setting for the hygrothermograph 104.

Referring to FIG. 6B, the time interval between step S609 and step S606 is represented as t1, the time interval between step S613 and step S610 is equal to the time interval between step S609 and step S606, and the time interval between step S613 and step S610 may also be represented as t1. The time interval between step S614 and step S610 is represented as t3. With the foregoing step S601 to step S612, the bedroom lamp 102, the air detector 103, and the hygrothermograph 104 may achieve an effect of heartbeat synchronization. For example, as shown in FIG. 6B, the bedroom lamp 102, the air detector 103, and the hygrothermograph 104 may synchronously and periodically send heartbeat messages to the smart speaker 101. It should be explained and noted that, the foregoing heartbeat synchronization means that the bedroom lamp 102, the air detector 103, and the hygrothermograph 104 may collectively send heartbeat messages to the smart speaker 101 within a third time threshold. The third time threshold is equal to the time interval t3 between step S614 and step S610, that is, the third time threshold includes a sum of a time in which the bedroom lamp 102 performs step S610, the second preset time, a time in which the smart speaker 101 performs step S612, a time in which the air detector 103 performs step S613, and a time in which the hygrothermograph 104 performs step S614 after the smart speaker 101 completes heartbeat setting for the hygrothermograph 104. By using the foregoing heartbeat setting method, the smart speaker 101 may centrally scan, within a scanning time segment tₛ₃, the heartbeat messages sent by the bedroom lamp 102, the air detector 103, and the hygrothermograph 104. tₛ₃ may be equal to the third time threshold, or may be greater than the third time threshold. When the bedroom lamp 102, the air detector 103, and the hygrothermograph 104 send no heartbeat message, the smart speaker 101 may be in a sleep state. In the sleep state, the smart speaker 101 does not scan the heartbeat messages of the bedroom lamp 102, the air detector 103, and the hygrothermograph 104. For example, after the smart speaker 101 completes heartbeat setting for the bedroom lamp 102, the air detector 103, and the hygrothermograph 104 by using the foregoing heartbeat setting method, the scanning time segment tₛ₃ and the sleep time segment may be set by using a timer. The timer starts timing. If the sleep time segment ends, the processor 110 may send an instruction for starting scanning a heartbeat message to a Bluetooth chip of the smart speaker 101, and the Bluetooth chip executes the instruction. Within the scanning time segment tₛ₃, the antenna may receive electromagnetic wave signals corresponding to the heartbeat messages of the bedroom lamp 102, the air detector 103, and the hygrothermograph 104. If the scanning time segment tₛ₃ ends, the processor 110 may send an instruction for stopping scanning a heartbeat message to the Bluetooth chip of the smart speaker 101, and the Bluetooth chip receives the instruction, and executes the instruction, so that the heartbeat messages of the bedroom lamp 102, the air detector 103, and the hygrothermograph 104 are not received, to switch the smart speaker 101 to a sleep state.

It should be explained and noted that, when the smart speaker 101 does not complete heartbeat setting for the bedroom lamp 102, the air detector 103, and the hygrothermograph 104, the smart speaker 101 may be always in a scanning state. When the smart speaker 101 completes heartbeat setting for the bedroom lamp 102, the air detector 103, and the hygrothermograph 104, the smart speaker 101 may scan the heartbeat messages of the bedroom lamp 102, the air detector 103, and the hygrothermograph 104 within the scanning time segment by setting the scanning time segment and the sleep time segment. In the sleep time segment, the smart speaker does not scan the heartbeat messages of the bedroom lamp 102, the air detector 103, and the hygrothermograph 104.

In the foregoing heartbeat synchronization method, the Bluetooth gateway performs heartbeat setting on the first electronic device; performs heartbeat setting on the second electronic device after the Bluetooth gateway receives the first heartbeat message sent by the first electronic device and the first preset time expires; and performs heartbeat setting on the third electronic device after the Bluetooth gateway receives the heartbeat message sent by the first electronic device and the second preset time expires. In addition, the Bluetooth gateway sets a same heartbeat period for the first electronic device, the second electronic device, and the third electronic device. In the heartbeat synchronization method, the first electronic device, the second electronic device, and the third electronic device may collectively send heartbeat messages to the Bluetooth gateway within the third time threshold, to achieve an effect of heartbeat synchronization. In this way, the Bluetooth gateway may centrally scan the heartbeat messages of the first electronic device, the second electronic device, and the third electronic device within the time range tₛ₃, and when the first electronic device, the second electronic device, and the third electronic device send no heartbeat message, the Bluetooth gateway may be switched to a sleep state, and does not scan the heartbeat messages of the first electronic device, the second electronic device, and the third electronic device, thereby reducing power consumption of the Bluetooth gateway.

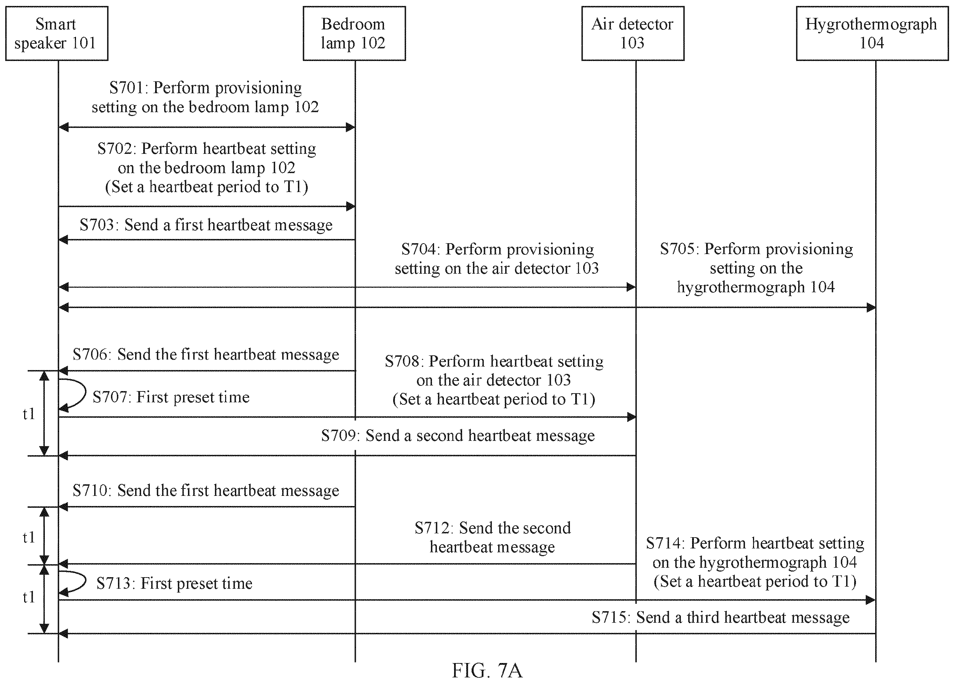

In some embodiments, the Bluetooth gateway may perform heartbeat setting on the third electronic device after the Bluetooth gateway receives the second heartbeat message sent by the second electronic device and the first preset time expires. An example in which the Bluetooth gateway is the smart speaker 101, the first electronic device is the bedroom lamp 102, the second electronic device is the air detector 103, and the third electronic device is the hygrothermograph 104 is used for description. Referring to FIG. 7A, step S701 to step S710 may be performed as same steps as step S601 to step S610.

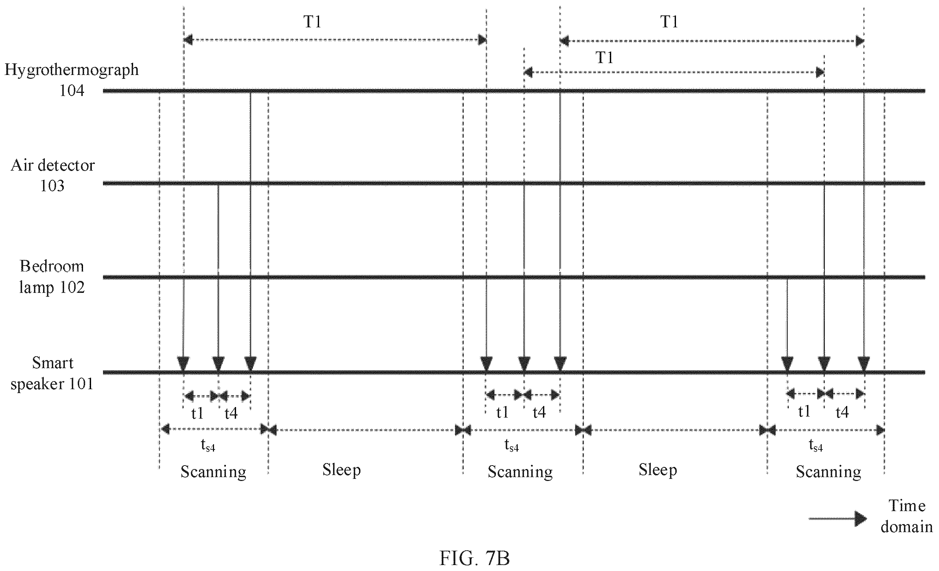

Step S712: The air detector 103 sends a second heartbeat message to the smart speaker 101. As shown in FIG. 7B, a time interval between step S712 and step 709 is T1.

Step S713: When the smart speaker 101 receives the second heartbeat message sent by the air detector 103, a first preset time expires. The first preset time is the same as the first preset time in step S707.

Step S714 may be performed as a same step as step S612 in the foregoing embodiment, and step S715 may be performed as a same step as step S614 in the foregoing embodiment.

Referring to FIG. 7B, a time interval between step S710 and step S712 may be the same as a time interval between step S606 and step S609 in the foregoing embodiment, and is represented as t1. A time interval between step S712 and step S715 may be represented as t4, where t4 includes the first preset time, a time in which the smart speaker 101 performs step S714, and a time in which the hygrothermograph 104 performs step S715, and t4 may also be equal to t1.

With the foregoing step S701 to step S714 shown in FIG. 7A, the bedroom lamp 102, the air detector 103, and the hygrothermograph 104 may achieve an effect of heartbeat synchronization. For example, as shown in FIG. 7B, the bedroom lamp 102, the air detector 103, and the hygrothermograph 104 may synchronously and periodically send heartbeat messages to the smart speaker 101. It should be explained and noted that, the foregoing heartbeat synchronization means that the bedroom lamp 102, the air detector 103, and the hygrothermograph 104 may collectively send heartbeat messages to the smart speaker 101 within a fourth time threshold. The fourth time threshold is equal to a time interval between step S710 and step S715. The smart speaker 101 may centrally scan, in one time range tₛ₄, the heartbeat messages sent by the bedroom lamp 102, the air detector 103, and the hygrothermograph 104. tₛ₄ may be equal to the fourth time threshold, or may be greater than the fourth time threshold.

In some other embodiments, the Bluetooth gateway may further set heartbeat parameters of at least three nodes in the Bluetooth mesh network, so that the at least three nodes in the Bluetooth mesh network collectively send heartbeats to the Bluetooth gateway within one time range, to achieve an effect of heartbeat synchronization. For a heartbeat synchronization method for at least three nodes in the Bluetooth mesh network, refer to the heartbeat synchronization process shown in FIG. 7. Details are not described herein again.

In the heartbeat synchronization method provided in this embodiment of this application, different nodes in the Bluetooth mesh network may collectively send heartbeat messages to the Bluetooth gateway within one time threshold. The Bluetooth gateway may centrally scan heartbeat messages of different nodes in the Bluetooth mesh network within the time range, and does not need to perform continuous scanning, thereby reducing power consumption of the Bluetooth gateway.

It should be noted that the heartbeat synchronization method provided in this embodiment of this application is described by using an example in which the method is applied to the Bluetooth mesh network. The heartbeat synchronization method for reducing power consumption may also be applicable to a network using classic Bluetooth and a Wi-Fi network.

In some other embodiments, to avoid a clock deviation between nodes in the Bluetooth mesh network in the heartbeat synchronization system 100, the Bluetooth gateway may check, at an interval of a preset check time based on a heartbeat window threshold, heartbeat windows of all nodes that are in the Bluetooth mesh network and for which heartbeat setting has been completed. The heartbeat window is an interval between a time point at which a node that is in the Bluetooth mesh network and on which heartbeat setting is first performed by the Bluetooth gateway in the heartbeat synchronization system 100 sends a heartbeat message to the Bluetooth gateway and a time point at which an N^{th} node that is in the Bluetooth mesh network and on which heartbeat setting is last performed by the Bluetooth gateway sends a heartbeat message to the Bluetooth gateway, where N represents an integer greater than or equal to 2. The check time interval may be preset by the Bluetooth gateway, or may be set by the user. The heartbeat window threshold may be preset by the Bluetooth gateway, or may be set by the user. If the heartbeat windows of all the nodes in the Bluetooth mesh network in the heartbeat synchronization system 100 exceed the heartbeat window threshold, the Bluetooth gateway re-sets heartbeat parameters of all the nodes that are in the Bluetooth mesh network and for which heartbeat setting has been completed.

For example, the Bluetooth gateway in the heartbeat synchronization system 100 may be the smart speaker 101, the first electronic device may be the bedroom lamp 102, and the second electronic device may be the air detector 103. After the smart speaker 101 completes heartbeat setting for the bedroom lamp 102 and the air detector 103 by using the heartbeat synchronization method shown in FIG. 5A, the heartbeat window threshold preset by the smart speaker 101 may be 1 hour, and the check time interval may be 3 hours. The smart speaker 101 checks heartbeat windows of the bedroom lamp 102 and the air detector 103 at an interval of 3 hours. If the heartbeat windows of the bedroom lamp 102 and the air purifier 105 exceed 1 hour, the smart speaker 101 performs heartbeat setting on the bedroom lamp 102 and the air purifier 105 again.

The following describes in detail the provisioning setting method in the foregoing embodiment by using an example in which the electronic device 101 shown in FIG. 1 is a Bluetooth gateway and the electronic device 101 is a smart speaker, the electronic device 102 is a bedroom lamp, and the smart speaker 101 may perform provisioning setting on the bedroom lamp 102. Referring to FIG. 8, the provisioning setting process may include the following steps:
Step S810: Establish a link between the smart speaker 101 and the bedroom lamp 102.

Before the smart speaker 101 performs provisioning setting on the bedroom lamp 102, the bedroom lamp 102 sends a beacon message of a non-provisioned device to the smart speaker 101 (for details, refer to step S811 in FIG. 4), so that the bedroom lamp 102 is discovered by the smart speaker 101. The beacon message of the non-provisioned device includes a device identifier (for example, a MAC address of the bedroom lamp 102), and the device identifier enables the smart speaker 101 to identify the bedroom lamp 102, to perform provisioning setting on the bedroom lamp 102. After obtaining, through scanning, the beacon message of the non-provisioned device sent by the bedroom lamp 102, the smart speaker 101 sends a provisioning link open message to the bedroom lamp 102 (referring to step S812 in FIG. 4). After receiving the provisioning link open message, the bedroom lamp 102 sends a provisioning link response message to the smart speaker 101, to notify the smart speaker 101 that the bedroom lamp 102 has received the provisioning link open message (referring to step S813 in FIG. 4).

Step S820: The smart speaker 101 sends a provisioning invitation to the bedroom lamp 102.

After the provisioning link is established, the smart speaker 101 sends the provisioning invitation information to the bedroom lamp 102 (referring to step S821 in FIG. 4). The provisioning invitation information includes an Attention Duration field, indicating a visual indication manner that should be used for the bedroom lamp 102 and a time in which attention of the user is attracted. In response to the provisioning invitation information sent by the smart speaker 101, the bedroom lamp 102 sends provisioning capability information to the smart speaker 101. The provisioning capability information includes a group of security algorithms supported by the bedroom lamp 102, a public key type supported by the bedroom lamp 102, availability of exchanging public keys by using an out-of-band (out of band, OOB) technology, whether a static out-of-band (static OOB) authentication manner is supported, whether an input out-of-band (input OOB) authentication manner is supported, whether an output out-of-band (output OOB) authentication manner is supported, a type of data that is allowed to be output, a type of data that is allowed to be input by the user, and the like (referring to step S822 in FIG. 4).

Step S830: The smart speaker 101 and the bedroom lamp 102 exchange provisioning public keys.

The public key is used to encrypt a message sent between the smart speaker 101 and the bedroom lamp 102. The smart speaker 101 and the bedroom lamp 102 may generate respective public keys, and send the public keys to each other.

The smart speaker 101 sends a provisioning start message (referring to step S831 in FIG. 4) to the bedroom lamp 102. By using the provisioning start message, the smart speaker 101 notifies the bedroom lamp 102 of a security algorithm selected by the smart speaker 101, a used public key type, and a selected authentication manner. Then, the smart speaker 101 and the bedroom lamp 102 exchange the provisioning public keys (referring to step S832 and step S833 in FIG. 4).

Step S840: The smart speaker 101 performs identity authentication on the bedroom lamp 102 in the selected authentication manner.

The smart speaker 101 may verify an identity of the bedroom lamp 102 in the input out-of-band (input OOB) authentication, output out-of-band (output OOB) authentication, static out-of-band (static OOB) authentication, or no out-of-band (no OOB) authentication manner (referring to step S841 and step S842 in FIG. 8). In the output OOB authentication method, the non-provisioned device selects a random number, and outputs the number in a manner compatible with a function of the device. The user who starts the Bluetooth gateway needs to input the observed number on the Bluetooth gateway to verify the non-provisioned device. For example, the bedroom lamp 102 selects a random number, and can output the random number in a blinking manner. The user inputs, on a display screen of the smart speaker 101, a quantity that is of blinking times of the bedroom lamp 102 and that is obtained through observation. The input OOB authentication method is similar to the output OOB authentication method, but the device for generating the random number is different. In the input OOB authentication method, the Bluetooth gateway generates and displays a random number, and then prompts the user to perform an appropriate operation to input the random number into the non-provisioned device. For example, the smart speaker 101 generates a random number, and prompts the user on the display screen. The user may press a switch of the bedroom lamp 102 several times within a specific time, to input the random number in this manner. When the non-provisioned device does not support the input OOB authentication manner or the output OOB authentication manner, the Bluetooth gateway may verify the non-provisioned device in the static OOB authentication manner or no OOB authentication manner. When the static OOB authentication or no OOB authentication manner is used. the Bluetooth gateway and the non-provisioned device each generate a random number to subsequently check a confirmation value.

The smart speaker 101 and the bedroom lamp 102 further need to generate and check a confirmation value (check confirmation value) (referring to step S843 and step S844 in FIG. 8). The Bluetooth gateway and the non-provisioned device calculate respective confirmation values by using a same generation function. After the confirmation values are generated, the Bluetooth gateway and the non-provisioned device exchange respective confirmation values for check. For example, the smart speaker 101 generates a first random number, and sends, to the bedroom lamp 102, the first random number and a first confirmation value that is calculated based on the first random number. The bedroom lamp 102 receives the first random number sent by the smart speaker 101, and calculates a second confirmation value based on the first random number and a same generation function. If the second confirmation value does not match the first confirmation value, the provisioning setting process is terminated. If the second confirmation value matches the first confirmation value, the bedroom lamp 102 generates a second random number, and sends, to the smart speaker 101, the second random number and a third confirmation value that is calculated based on the second random number. The smart speaker 101 receives the second random number, and calculates a fourth confirmation value based on the second random number and a same generation function. If the fourth confirmation value does not match the third confirmation value, the provisioning setting process is terminated. If the fourth confirmation value matches the third confirmation value, check of the confirmation values of the smart speaker 101 and the bedroom lamp 102 is completed, and identity authentication of the two parties succeeds.

Step S850: The smart speaker 101 distributes network data.

The smart speaker 101 sends provisioning data to the bedroom lamp 102 (referring to step S851 in FIG. 4). The provisioning data includes fields such as a network key (NetKey), a device key (DevKey), a key index, an initialization vector index (IV index), and a unicast address (Unicast Address). In response to the provisioning data sent by the smart speaker 101, the bedroom lamp 102 sends a provisioning complete message to the smart speaker 101, so that the smart speaker 101 learns that the smart speaker 101 has completed provisioning setting for the bedroom lamp 102 (referring to step S852 in FIG. 8).

Step S860: Provisioning ends.

The smart speaker 101 sends a provisioning link close message (referring to step S861) to the bedroom lamp 102, to close the provisioning link between the smart speaker 101 and the bedroom lamp 102.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

Functional units in embodiments of this application may be integrated into one processing unit, or each of the units may exist alone physically, or two or more units are integrated into one unit. The integrated unit may be implemented in a form of hardware, or may be implemented in a form of a software functional unit.

## Claims

1. A heartbeat synchronization method applied to a Bluetooth mesh network, wherein the method comprises:
determining, by a first electronic device (101), a heartbeat period of a second electronic device (102);
receiving, by the first electronic device (101), a heartbeat message of the second electronic device (102), wherein the heartbeat message of the second electronic device (102) is sent based on the heartbeat period of the second electronic device (102);
determining, by the first electronic device (101), a first preset time;
sending, by the first electronic device (101), a first message to a third electronic device (103) after the first preset time expires, wherein the first message is used to set a heartbeat period of the third electronic device (103), and the heartbeat period of the third electronic device (103) is the same as the heartbeat period of the second electronic device (102); and
receiving, by the first electronic device (101), a heartbeat message of the third electronic device (103), wherein
the first electronic device (101) has a first working period, the first working period has a first time segment and a second time segment, the first electronic device (101) is in a first state in the first time segment of the first working period, the first electronic device (101) is in a second state in the second time segment of the first working period, power consumption in the first state is different from power consumption in the second state, the second state is a sleep state, and the first electronic device (101) receives the heartbeat message of the second electronic device (102) and the heartbeat message of the third electronic device (103) in the first time segment of the first working period.

2. The method according to claim 1, wherein the method further comprises:
after the first electronic device (101) determines the heartbeat period of the second electronic device (102), sending, by the first electronic device (102), a second message to the second electronic device (102), wherein the second message comprises the heartbeat period of the second electronic device (102), and the second message is used to set the heartbeat period of the second electronic device (102).

3. The method according to claim 1 or 2, wherein the method further comprises:
before the first electronic device (101) determines the heartbeat period of the second electronic device (102), receiving, by the first electronic device (101), the heartbeat message of the second electronic device (102); and
the determining, by a first electronic device (101), a heartbeat period of a second electronic device (102) comprises: obtaining, by the first electronic device (101), the heartbeat period of the second electronic device (102) through measurement.

4. The method according to any one of claims 1 to 3. wherein the heartbeat message of the third electronic device (103) is sent based on the heartbeat period of the third electronic device (103).

5. The method according to any one of claims 1 to 4, wherein the first electronic device (101) does not receive the heartbeat message of the second electronic device (102) and the heartbeat message of the third electronic device (103) in the second time segment of the first working period.

6. The method according to any one of claims 1 to 5, wherein the method further comprises:
before receiving the heartbeat message of the second electronic device (102), performing, by the first electronic device (101), provisioning setting on the second electronic device (102).

7. The method according to any one of claims 1 to 6, wherein the method further comprises:
before receiving the heartbeat message of the third electronic device (103), performing, by the first electronic device (101), provisioning setting on the third electronic device (103).

8. The method according to any one of claims 1 to 7, wherein the method further comprises: receiving, by the first electronic device (101), the heartbeat message of the second electronic device (102);
determining, by the first electronic device (101), a second preset time;
sending, by the first electronic device (101), a third message to a fourth electronic device (104) after the second preset time expires, wherein the third message is used to set a heartbeat period of the fourth electronic device (104), and the heartbeat period of the fourth electronic device (104) is the same as the heartbeat period of the second electronic device (102);
receiving, by the first electronic device (101), the heartbeat message of the third electronic device (103); and
receiving, by the first electronic device (101), a heartbeat message of the fourth electronic device (104), wherein
the first electronic device (101) has a second working period, the second working period has a first time segment and a second time segment, the first electronic device (101) is in a first state in the first time segment of the second working period, the first electronic device (101) is in a second state in the second time segment of the second working period, power consumption in the first state is different from power consumption in the second state, and the first electronic device (101) receives the heartbeat message of the second electronic device (102), the heartbeat message of the third electronic device (103), and the heartbeat message of the fourth electronic device (104) in the first time segment of the second working period.

9. The method according to any one of claims 1 to 8, wherein the method further comprises:
the heartbeat message of the fourth electronic device (104) is sent based on the heartbeat period of the fourth electronic device (104).

10. The method according to any one of claims 1 to 9, wherein the first electronic device (101) does not receive the heartbeat message of the second electronic device (102), the heartbeat message of the third electronic device (103), and the heartbeat message of the fourth electronic device (104) in the second time segment of the second working period.

11. The method according to any one of claims 1 to 10, wherein the method further comprises:
before receiving the heartbeat message of the fourth electronic device (104), performing, by the first electronic device (101), provisioning setting on the fourth electronic device (104).

12. An electronic device, comprising one or more touchscreens, one or more memories, and one or more processors, wherein the one or more memories store one or more computer programs; and
when the one or more processors execute the one or more computer programs, the electronic device is enabled to implement the method according to any one of claims 1 to 11.

13. A computer-readable storage medium, comprising instructions, wherein when the instructions are run on an electronic device, the electronic device is enabled to perform the method according to any one of claims 1 to 11.

14. A computer program product, comprising instructions, wherein when the instructions are run on an electronic device, the electronic device is enabled to perform the method according to any one of claims 1 to 11.

## Patentansprüche

1. "Heartbeat"-Synchronisierungsverfahren, das auf ein Bluetooth "Mesh"-Netzwerk angewendet wird, wobei das Verfahren Folgendes umfasst:
Bestimmen, durch ein erstes elektronisches Gerät (101), eines "Heartbeat"-Zeitraums eines zweiten elektronischen Geräts (102);
Empfangen, durch das erste elektronische Gerät (101), einer "Heartbeat"-Nachricht des zweiten elektronischen Geräts (102), wobei die "Heartbeat"-Nachricht des zweiten elektronischen Geräts (102) basierend auf dem "Heartbeat"-Zeitraum des zweiten elektronischen Geräts (102) gesendet wird;
Bestimmen, durch das erste elektronische Gerät (101), einer ersten voreingestellten Zeit;
Senden, durch das erste elektronische Gerät (101), einer ersten Nachricht an ein drittes elektronisches Gerät (103), nachdem die erste voreingestellte Zeit abläuft, wobei die erste Nachricht verwendet wird, um einen "Heartbeat"-Zeitraum des dritten elektronischen Geräts (103) einzustellen, und der "Heartbeat"-Zeitraum des dritten elektronischen Geräts (103) der gleiche wie der "Heartbeat"-Zeitraum des zweiten elektronischen Geräts (102) ist; und
Empfangen, durch das erste elektronische Gerät (101), einer "Heartbeat"-Nachricht des dritten elektronischen Geräts (103), wobei
das erste elektronische Gerät (101) einen ersten Arbeitszeitraum aufweist, der erste Arbeitszeitraum ein erstes Zeitsegment und ein zweites Zeitsegment aufweist, sich das erste elektronische Gerät (101) in dem ersten Zeitsegment des ersten Arbeitszeitraums in einem ersten Zustand befindet, sich das erste elektronische Gerät (101) in dem zweiten Zeitsegment des ersten Arbeitszeitraums in einem zweiten Zustand befindet, eine Leistungsaufnahme in dem ersten Zustand sich von einer Leistungsaufnahme in dem zweiten Zustand unterscheidet, der zweite Zustand ein Ruhezustand ist, und das erste elektronische Gerät (101) die "Heartbeat"-Nachricht des zweiten elektronischen Geräts (102) und die "Heartbeat"-Nachricht des dritten elektronischen Geräts (103) in dem ersten Zeitsegment des ersten Arbeitszeitraums empfängt.

2. Verfahren nach Anspruch 1, wobei das Verfahren ferner Folgendes umfasst:
nachdem das erste elektronische Gerät (101) den "Heartbeat"-Zeitraum des zweiten elektronischen Geräts (102) bestimmt, Senden, durch das erste elektronische Gerät (102), einer zweiten Nachricht an das zweite elektronische Gerät (102), wobei die zweite Nachricht den "Heartbeat"-Zeitraum des zweiten elektronischen Geräts (102) umfasst, und die zweite Nachricht verwendet wird, um den "Heartbeat"-Zeitraum des zweiten elektronischen Geräts (102) einzustellen.

3. Verfahren nach Anspruch 1 oder 2, wobei das Verfahren ferner Folgendes umfasst:
bevor das erste elektronische Gerät (101) den "Heartbeat"-Zeitraum des zweiten elektronischen Geräts (102) bestimmt, Empfangen, durch das erste elektronische Gerät (101), der "Heartbeat"-Nachricht des zweiten elektronischen Geräts (102); und
wobei das Bestimmen, durch ein erstes elektronisches Gerät (101), eines "Heartbeat"-Zeitraums eines zweiten elektronischen Geräts (102) Folgendes umfasst: Erhalten, durch das erste elektronische Gerät (101), des "Heartbeat"-Zeitraums des zweiten elektronischen Geräts (102) durch Messung.

4. Verfahren nach einem der Ansprüche 1 bis 3, wobei die "Heartbeat"-Nachricht des dritten elektronischen Geräts (103) basierend auf dem "Heartbeat"-Zeitraum des dritten elektronischen Geräts (103) gesendet wird.

5. Verfahren nach einem der Ansprüche 1 bis 4, wobei das erste elektronische Gerät (101) die "Heartbeat"-Nachricht des zweiten elektronischen Geräts (102) und die "Heartbeat"-Nachricht des dritten elektronischen Geräts (103) in dem zweiten Zeitsegment des ersten Arbeitszeitraums nicht empfängt.

6. Verfahren nach einem der Ansprüche 1 bis 5, wobei das Verfahren ferner Folgendes umfasst:
vor Empfangen der "Heartbeat"-Nachricht des zweiten elektronischen Geräts (102), Durchführen, durch das erste elektronische Gerät (101), einer Bereitstellungseinstellung an dem zweiten elektronischen Gerät (102).

7. Verfahren nach einem der Ansprüche 1 bis 6, wobei das Verfahren ferner Folgendes umfasst:
vor Empfangen der "Heartbeat"-Nachricht des dritten elektronischen Geräts (103), Durchführen, durch das erste elektronische Gerät (101), einer Bereitstellungseinstellung an dem dritten elektronischen Gerät (103).

8. Verfahren nach einem der Ansprüche 1 bis 7, wobei das Verfahren ferner Folgendes umfasst: Empfangen, durch das erste elektronische Gerät (101), der "Heartbeat"-Nachricht des zweiten elektronischen Geräts (102);
Bestimmen, durch das erste elektronische Gerät (101), einer zweiten voreingestellten Zeit;
Senden, durch das erste elektronische Gerät (101), einer dritten Nachricht an ein viertes elektronisches Gerät (104), nachdem die zweite voreingestellte Zeit abläuft, wobei die dritte Nachricht verwendet wird, um einen "Heartbeat"-Zeitraum des vierten elektronischen Geräts (104) einzustellen, und der "Heartbeat"-Zeitraum des vierten elektronischen Geräts (104) der gleiche wie der "Heartbeat"-Zeitraum des zweiten elektronischen Geräts (102) ist;
Empfangen, durch das erste elektronische Gerät (101), der "Heartbeat"-Nachricht des dritten elektronischen Geräts (103); und
Empfangen, durch das erste elektronische Gerät (101), einer "Heartbeat"-Nachricht des vierten elektronischen Geräts (104), wobei
das erste elektronische Gerät (101) einen zweiten Arbeitszeitraum aufweist, der zweite Arbeitszeitraum ein erstes Zeitsegment und ein zweites Zeitsegment aufweist, sich das erste elektronische Gerät (101) in dem ersten Zeitsegment des zweiten Arbeitszeitraums in einem ersten Zustand befindet, sich das erste elektronische Gerät (101) in dem zweiten Zeitsegment des zweiten Arbeitszeitraums in einem zweiten Zustand befindet, sich eine Leistungsaufnahme in dem ersten Zustand von einer Leistungsaufnahme in dem zweiten Zustand unterscheidet, und das erste elektronische Gerät (101) die "Heartbeat"-Nachricht des zweiten elektronischen Geräts (102), die "Heartbeat"-Nachricht des dritten elektronischen Geräts (103) und die "Heartbeat"-Nachricht des vierten elektronischen Geräts (104) in dem ersten Zeitsegment des zweiten Arbeitszeitraums empfängt.

9. Verfahren nach einem der Ansprüche 1 bis 8, wobei das Verfahren ferner Folgendes umfasst:
die "Heartbeat"-Nachricht des vierten elektronischen Geräts (104) wird basierend auf dem "Heartbeat"-Zeitraum des vierten elektronischen Geräts (104) gesendet.

10. Verfahren nach einem der Ansprüche 1 bis 9, wobei das erste elektronische Gerät (101) die "Heartbeat"-Nachricht des zweiten elektronischen Geräts (102), die "Heartbeat"-Nachricht des dritten elektronischen Geräts (103) und die "Heartbeat"-Nachricht des vierten elektronischen Geräts (104) in dem zweiten Zeitsegment des zweiten Arbeitszeitraums nicht empfängt.

11. Verfahren nach einem der Ansprüche 1 bis 10, wobei das Verfahren ferner Folgendes umfasst:
vor Empfangen der "Heartbeat"-Nachricht des vierten elektronischen Geräts (104), Durchführen, durch das erste elektronische Gerät (101), einer Bereitstellungseinstellung an dem vierten elektronischen Gerät (104).

12. Elektronisches Gerät, das einen oder mehrere Berührungsbildschirme, einen oder mehrere Speicher und einen oder mehrere Prozessoren umfasst, wobei der eine oder die mehreren Speicher ein oder mehrere Computerprogramme speichern; und wobei, wenn der eine oder die mehreren Prozessoren das eine oder die mehreren Computerprogramme ausführen, dem elektronischen Gerät ermöglicht wird, das Verfahren nach einem der Ansprüche 1 bis 11 zu implementieren.

13. Computerlesbares Speichermedium, das Anweisungen umfasst, wobei, wenn die Anweisungen auf einem elektronischen Gerät ausgeführt werden, dem elektronischen Gerät ermöglicht wird, das Verfahren nach einem der Ansprüche 1 bis 11 durchzuführen.

14. Computerprogrammprodukt, das Anweisungen umfasst, wobei, wenn die Anweisungen auf einem elektronischen Gerät ausgeführt werden, dem elektronischen Gerät ermöglicht wird, das Verfahren nach einem der Ansprüche 1 bis 11 durchzuführen.

## Revendications

1. Procédé de synchronisation de battement de cœur appliqué à un réseau maillé Bluetooth, le procédé comprenant :
la détermination, par un premier dispositif électronique (101), d'une période de battement de cœur d'un deuxième dispositif électronique (102) ;
la réception, par le premier dispositif électronique (101), d'un message de battement de cœur du deuxième dispositif électronique (102), dans lequel le message de battement de cœur du deuxième dispositif électronique (102) est envoyé sur la base de la période de battement de cœur du deuxième dispositif électronique (102) ;
la détermination, par le premier dispositif électronique (101), d'un premier temps préréglé ;
l'envoi, par le premier dispositif électronique (101), d'un premier message à un troisième dispositif électronique (103) après que le premier temps préréglé expire, dans lequel le premier message est utilisé pour régler une période de battement de cœur du troisième dispositif électronique (103), et la période de battement de cœur du troisième dispositif électronique (103) est la même que la période de battement de cœur du deuxième dispositif électronique (102) ; et
la réception, par le premier dispositif électronique (101), d'un message de battement de cœur du troisième dispositif électronique (103), dans lequel le premier dispositif électronique (101) a une première période de fonctionnement, la première période de fonctionnement a un premier segment temporel et un second segment temporel, le premier dispositif électronique (101) est dans un premier état dans le premier segment temporel de la première période de fonctionnement, le premier dispositif électronique (101) est dans un second état dans le second segment temporel de la première période de fonctionnement, une consommation énergétique dans le premier état est différente d'une consommation énergétique dans le second état, le second état est un état de sommeil, et le premier dispositif électronique (101) reçoit le message de battement de cœur du deuxième dispositif électronique (102) et le message de battement de cœur du troisième dispositif électronique (103) dans le premier segment temporel de la première période de fonctionnement.

2. Procédé selon la revendication 1, le procédé comprenant en outre :
après que le premier dispositif électronique (101) détermine la période de battement de cœur du deuxième dispositif électronique (102), l'envoi, par le premier dispositif électronique (102), d'un deuxième message au deuxième dispositif électronique (102), dans lequel le deuxième message comprend la période de battement de cœur du deuxième dispositif électronique (102), et le deuxième message est utilisé pour régler la période de battement de cœur du deuxième dispositif électronique (102).

3. Procédé selon la revendication 1 ou 2, le procédé comprenant en outre :
avant que le premier dispositif électronique (101) ne détermine la période de battement de cœur du deuxième dispositif électronique (102), la réception, par le premier dispositif électronique (101), du message de battement de cœur du deuxième dispositif électronique (102) ; et
la détermination, par un premier dispositif électronique (101), d'une période de battement de cœur d'un deuxième dispositif électronique (102) comprend : l'obtention, par le premier dispositif électronique (101), de la période de battement de cœur du deuxième dispositif électronique (102) par le biais de mesure.

4. Procédé selon l'une quelconque des revendications 1 à 3, dans lequel le message de battement de cœur du troisième dispositif électronique (103) est envoyé sur la base de la période de battement de cœur du troisième dispositif électronique (103).

5. Procédé selon l'une quelconque des revendications 1 à 4, dans lequel le premier dispositif électronique (101) ne reçoit pas le message de battement de cœur du deuxième dispositif électronique (102) et le message de battement de cœur du troisième dispositif électronique (103) dans le second segment temporel de la première période de fonctionnement.

6. Procédé selon l'une quelconque des revendications 1 à 5, le procédé comprenant en outre :
avant la réception du message de battement de cœur du deuxième dispositif électronique (102), la réalisation, par le premier dispositif électronique (101), d'un réglage d'approvisionnement sur le deuxième dispositif électronique (102).

7. Procédé selon l'une quelconque des revendications 1 à 6, le procédé comprenant en outre :
avant la réception du message de battement de cœur du troisième dispositif électronique (103), la réalisation, par le premier dispositif électronique (101), d'un réglage d'approvisionnement sur le troisième dispositif électronique (103).

8. Procédé selon l'une quelconque des revendications 1 à 7, le procédé comprenant en outre : la réception, par le premier dispositif électronique (101), du message de battement de cœur du deuxième dispositif électronique (102) ;
la détermination, par le premier dispositif électronique (101), d'un second temps préréglé ;
l'envoi, par le premier dispositif électronique (101), d'un troisième message à un quatrième dispositif électronique (104) après le second temps préréglé expire, dans lequel la troisième message est utilisé pour régler une période de battement de cœur du quatrième dispositif électronique (104), et la période de battement de cœur du quatrième dispositif électronique (104) est la même que la période de battement de cœur du deuxième dispositif électronique (102) ;
la réception, par le premier dispositif électronique (101), du message de battement de cœur du troisième dispositif électronique (103) ; et
la réception, par le premier dispositif électronique (101), d'un message de battement de cœur du quatrième dispositif électronique (104), dans lequel le premier dispositif électronique (101) a une seconde période de fonctionnement, la seconde période de fonctionnement a un premier segment temporel et un second segment temporel, le premier dispositif électronique (101) est dans un premier état dans le premier segment temporel de la seconde période de fonctionnement, le premier dispositif électronique (101) est dans un second état dans le second segment temporel de la seconde période de fonctionnement, une consommation énergétique dans le premier état est différente d'une consommation énergétique dans le second état, et le premier dispositif électronique (101) reçoit le message de battement de cœur du deuxième dispositif électronique (102), le message de battement de cœur du troisième dispositif électronique (103), et le message de battement de cœur du quatrième dispositif électronique (104) dans le premier segment temporel de la seconde période de fonctionnement.

9. Procédé selon l'une quelconque des revendications 1 à 8, le procédé comprenant en outre :
le message de battement de cœur du quatrième dispositif électronique (104) est envoyé sur la base de la période de battement de cœur du quatrième dispositif électronique (104).

10. Procédé selon l'une quelconque des revendications 1 à 9, dans lequel le premier dispositif électronique (101) ne reçoit pas le message de battement de cœur du deuxième dispositif électronique (102), le message de battement de cœur du troisième dispositif électronique (103), et le message de battement de cœur du quatrième dispositif électronique (104) dans le second segment temporel de la seconde période de fonctionnement.

11. Procédé selon l'une quelconque des revendications 1 à 10, le procédé comprenant en outre :
avant la réception du message de battement de cœur du quatrième dispositif électronique (104), la réalisation, par le premier dispositif électronique (101), d'un réglage d'approvisionnement sur le quatrième dispositif électronique (104).

12. Dispositif électronique, comprenant un ou plusieurs écrans tactiles, une ou plusieurs mémoires, et un ou plusieurs processeurs, dans lequel l'une ou les plusieurs mémoires stockent un ou plusieurs programmes d'ordinateur ; et
lorsque l'un ou les plusieurs processeurs exécutent l'un ou les plusieurs programmes d'ordinateur, le dispositif électronique est en mesure de mettre en œuvre le procédé selon l'une quelconque des revendications 1 à 11.

13. Support de stockage lisible par ordinateur, comprenant des instructions, dans lequel, lorsque les instructions sont exploitées sur un dispositif électronique, le dispositif électronique est en mesure de réaliser le procédé selon l'une quelconque des revendications 1 à 11.

14. Produit programme d'ordinateur, comprenant des instructions, dans lequel, lorsque les instructions sont exploitées sur un dispositif électronique, le dispositif électronique est en mesure de réaliser le procédé selon l'une quelconque des revendications 1 à 11.
